# EUROPEAN PATENT APPLICATION

(11) **EP 4 482 068 A1**
(43) Date of publication of application: **25.12.2024**
(21) Application number: 22925452.9
(22) Date of filing: 14.02.2022
(51) Int. Cl.: H04L 1/18

(54) **TIMER STARTING METHOD AND APPARATUS, DEVICE, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/076241
(87) International publication number: WO 2023/151090

(57) **Abstract**

The present disclosure relates to the technical field of communications, and provides a timer starting method and apparatus, a device, and a storage medium. The method comprises: a first terminal device receives data and/or information sent by a second terminal device by means of an SL (101), determines whether to feed back the data and/or information (102), starts a first retransmission timer when it is determined that the data and/or information are/is not fed back (103), and monitors a PSCCH during the operation of the first retransmission timer (104). For the situation that the first terminal device does not perform feedback, embodiments of the present disclosure provide the timer starting method, such that the retransmission time period can be further prolonged, and the transmission failure is avoided.

## Description

### TECHNICAL FIELD

The present disclosure relates to the field of communication technologies, and particularly, to a method/an apparatus/a device for starting a timer and a storage medium.

### BACKGROUND

In a communication system, sidelink (SL) communication mode is introduced to implement direct communication between terminal devices. When data and/or information is sent to a first terminal device (for example, the receiving terminal device) by a second terminal device (for example, a sending terminal device), the first terminal device performs feedback for or does not perform feedback. And if the first terminal device does not successfully receive the data and/or the information, the second terminal device usually requires to start a retransmission timer to retransmit data and/or information.

However, in related art, a specific method of "how to start the retransmission timer" does not exist for a case that the first terminal device does not perform feedback.

### SUMMARY

According to a method/an apparatus/a device for starting a timer and a storage medium proposed in the present disclosure, there is provided a timer starting method for the case that the first terminal device does not perform feedback.

According to an aspect of embodiments of the present disclosure, there is provided a method for starting a timer. The method is applied to a first terminal device, and includes:
receiving data and/or information sent by a second terminal device via a sidelink (SL);
determining whether to perform feedback for the data and/or the information;
starting a first retransmission timer in response to determining not to perform feedback for the data and/or the information; and
monitoring a physical sidelink control channel (PSCCH) during running of the first retransmission timer.

According to another aspect of embodiments of the present disclosure, there is provided a method for starting a timer. The method is applied to a second terminal device, and includes:
sending data and/or information to a first terminal device via an SL;
determining whether the first terminal device performs feedback for the received data and/or information;
determining that the first terminal device does not perform feedback for the received data and/or information, and starting a first retransmission timer; and
sending the data and/or the information to the first terminal device via a PSCCH during running of the first retransmission timer.

According to another aspect of embodiments of the present disclosure, there is provided an apparatus for starting a timer. The apparatus includes:
a receiving module, receive data and/or information sent by a second terminal device via an SL; and
a processing module, configured to determine whether to perform feedback for the data and/or the information; and to start a first retransmission timer in response to determining not to perform feedback for the data and/or the information.

The receiving module is further configured to monitor a PSCCH during running of the first retransmission timer.

According to another aspect of embodiments of the present disclosure, there is provided an apparatus for starting a timer. The apparatus includes:
a sending module, configured to send data and/or information to a first terminal device via an SL; and
a processing module, configured to determine whether the first terminal device performs feedback for the received data and/or information; and to determine that the first terminal device does not perform feedback for the received data and/or information, and start a first retransmission timer.

The sending module is further configured to send the data and/or the information to the first terminal device via a PSCCH during running of the first retransmission timer.

According to yet another aspect of embodiments of the present disclosure, there is provided a communication apparatus. The apparatus includes a processor and a memory. The memory stores a computer program, and the processor executes the computer program stored in the memory, to cause the apparatus to perform the method provided in the foregoing aspect of embodiments.

According to yet another aspect of embodiments of the present disclosure, there is provided a communication apparatus. The apparatus includes a processor and a memory. The memory stores a computer program, and the processor executes the computer program stored in the memory, to cause the apparatus to perform the method provided in the foregoing aspect of embodiments.

According to another aspect of embodiments of the present disclosure, there is provided a communication apparatus. The apparatus includes: a processor and an interface circuit.

The interface circuit is configured to receive code instructions and transmit the code instructions to the processor.

The processor is configured to run the code instructions to perform the method provided in the foregoing aspect of embodiments.

According to another aspect of embodiments of the present disclosure, there is provided a communication apparatus. The apparatus includes: a processor and an interface circuit.

The interface circuit is configured to receive code instructions and transmit the code instructions to the processor.

The processor is configured to run the code instructions to perform the method provided in the foregoing aspect of embodiments.

According to another aspect of embodiments of the present disclosure, there is provided a computer-readable storage medium for storing instructions. When the instructions are executed, the method provided in the aspect of embodiments of the present disclosure is implemented.

According to another aspect of embodiments of the present disclosure, there is provided a computer-readable storage medium for storing instructions. When the instructions are executed, the method provided in the aspect of embodiments of the present disclosure is implemented.

In summary, in the method for starting a timer and the device/storage medium/apparatus provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

Additional aspects and advantages of the present disclosure will be given in part in the following description, become apparent in part from the following description, or be learned from the practice of the present disclosure.

### BRIEF DESCRIPTION OF THE DRAWINGS

The above and/or additional aspects and advantages of the present disclosure will become apparent and easy to understand from the following description of embodiments in conjunction with the accompanying drawings.
FIG. 1 is a schematic flowchart of a method for starting a timer provided by an embodiment of the present disclosure.
FIG. 2 is a schematic flowchart of a method for starting a timer provided by another embodiment of the present disclosure.
FIG. 3 is a schematic flowchart of a method for starting a timer provided by yet another embodiment of the present disclosure.
FIG. 4a is a schematic flowchart of a method for starting a timer provided by another embodiment of the present disclosure.
FIG. 4b is a schematic flowchart of a method for starting a timer provided by another embodiment of the present disclosure.
FIG. 5a is a schematic flowchart of a method for starting a timer provided by another embodiment of the present disclosure.
FIG. 5b is a schematic flowchart of a method for starting a timer provided by another embodiment of the present disclosure.
FIG. 6a is a schematic flowchart of a method for starting a timer provided by another embodiment of the present disclosure.
FIG. 6b is a schematic flowchart of a method for starting a timer provided by another embodiment of the present disclosure.
FIG. 7a is a schematic flowchart of a method for starting a timer provided by another embodiment of the present disclosure.
FIG. 7b is a schematic flowchart of a method for starting a timer provided by another embodiment of the present disclosure.
FIG. 8a is a schematic flowchart of a method for starting a timer provided by another embodiment of the present disclosure.
FIG. 8b is a schematic flowchart of a method for starting a timer provided by another embodiment of the present disclosure.
FIG. 9a is a schematic flowchart of a method for starting a timer provided by another embodiment of the present disclosure.
FIG. 9b is a schematic flowchart of a method for starting a timer provided by another embodiment of the present disclosure.
FIG. 10a is a schematic flowchart of a method for starting a timer provided by another embodiment of the present disclosure.
FIG. 10b is a schematic flowchart of a method for starting a timer provided by another embodiment of the present disclosure.
FIG. 11a is a schematic flowchart of a method for starting a timer provided by another embodiment of the present disclosure.
FIG. 11b is a schematic flowchart of a method for starting a timer provided by another embodiment of the present disclosure.
FIG. 12a is a schematic flowchart of a method for starting a timer provided by another embodiment of the present disclosure.
FIG. 12b is a schematic flowchart of a method for starting a timer provided by another embodiment of the present disclosure.
FIG. 13 is a schematic flowchart of a method for starting a timer provided by another embodiment of the present disclosure.
FIG. 14 is a schematic flowchart of a method for starting a timer provided by another embodiment of the present disclosure.
FIG. 15 is a schematic flowchart of a method for starting a timer provided by another embodiment of the present disclosure.
FIG. 16a is a schematic flowchart of a method for starting a timer provided by another embodiment of the present disclosure.
FIG. 16b is a schematic flowchart of a method for starting a timer provided by another embodiment of the present disclosure.
FIG. 17a is a schematic flowchart of a method for starting a timer provided by another embodiment of the present disclosure.
FIG. 17b is a schematic flowchart of a method for starting a timer provided by another embodiment of the present disclosure.
FIG. 18a is a schematic flowchart of a method for starting a timer provided by another embodiment of the present disclosure.
FIG. 18b is a schematic flowchart of a method for starting a timer provided by another embodiment of the present disclosure.
FIG. 19a is a schematic flowchart of a method for starting a timer provided by another embodiment of the present disclosure.
FIG. 19b is a schematic flowchart of a method for starting a timer provided by another embodiment of the present disclosure.
FIG. 20a is a schematic flowchart of a method for starting a timer provided by another embodiment of the present disclosure.
FIG. 20b is a schematic flowchart of a method for starting a timer provided by another embodiment of the present disclosure.
FIG. 21a is a schematic flowchart of a method for starting a timer provided by another embodiment of the present disclosure.
FIG. 21b is a schematic flowchart of a method for starting a timer provided by another embodiment of the present disclosure.
FIG. 22a is a schematic flowchart of a method for starting a timer provided by another embodiment of the present disclosure.
FIG. 22b is a schematic flowchart of a method for starting a timer provided by another embodiment of the present disclosure.
FIG. 23a is a schematic flowchart of a method for starting a timer provided by another embodiment of the present disclosure.
FIG. 23b is a schematic flowchart of a method for starting a timer provided by another embodiment of the present disclosure.
FIG. 24a is a schematic flowchart of a method for starting a timer provided by another embodiment of the present disclosure.
FIG. 24b is a schematic flowchart of a method for starting a timer provided by another embodiment of the present disclosure.
FIG. 25 is a schematic flowchart of a method for starting a timer provided by another embodiment of the present disclosure.
FIG. 26 is a schematic structural diagram of an apparatus for starting a timer provided by an embodiment of the present disclosure.
FIG. 27 is a schematic structural diagram of an apparatus for starting a timer provided by another embodiment of the present disclosure.
FIG. 28 is a block diagram of a user equipment provided by an embodiment of the present disclosure.
FIG. 29 is a block diagram of a network device provided by an embodiment of the present disclosure.

### DETAILED DESCRIPTION

Exemplary embodiments will be described in detail herein, with examples shown in the accompanying drawings. When referring to the accompanying drawings, unless otherwise indicated, the same numbers in different drawings represent the same or similar elements. The embodiments described in the following exemplary embodiments do not represent all possible embodiments consistent with the embodiments of the present disclosure. On the contrary, they are only examples of devices and methods consistent with some aspects of the embodiments of the present disclosure as described in the accompanying claims.

Terms used in the embodiments of the present disclosure are merely for the purpose of describing particular embodiments, and are not intended to limit the embodiments of the present disclosure. The singular forms "a/an" and "this" used in the embodiments of the present disclosure and the appended claims are also intended to include plural forms, unless the context clearly indicates other meanings. It should also be understood that the term "and/or" as used herein refers to and includes any or all possible combinations of one or more associated listed items.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the words "if" and "in case" as used herein may be interpreted as "when" or "in a case that" or "in response to determining that".

A method and an apparatus for starting a timer, a user equipment, a network device, and a storage medium provided in embodiments of the present disclosure are described in detail below with reference to the accompanying drawings.

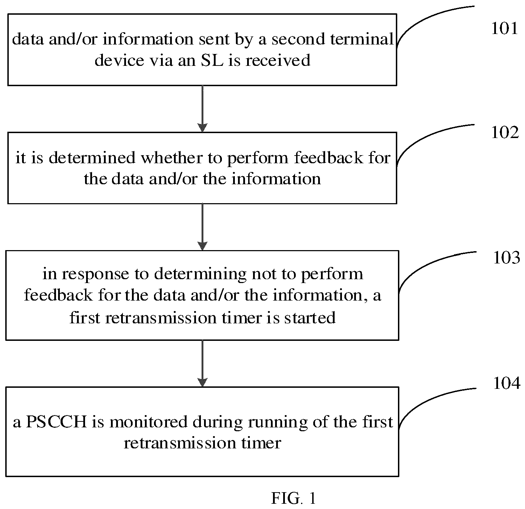

FIG. 1 is a schematic flowchart of a method for starting a timer provided by an embodiment of the present disclosure. The method is applied to a first terminal device, and as shown in FIG. 1, the method for starting a timer may include the following steps.

In step 101, data and/or information sent by a second terminal device via an SL is received.

It should be noted that, in an embodiment of the present disclosure, the terminal device may be a device that provides voice and/or data connectivity to a user. The terminal device may communicate with one or more core networks through a radio access network (RAN). The terminal device may be an Internet of Things terminal, such as a sensor device, a mobile phone (or referred to as a "cellular" phone), and a computer having an Internet of Things terminal, for example, may be a fixed, portable, pocket-sized, handheld, computer-built-in, or vehicle-mounted apparatus. For example, a station (STA), a subscriber unit, a subscriber station, a mobile station, a mobile, a remote station, an access point, a remote terminal, an access terminal, a user terminal, or a user agent. Alternatively, the terminal device may alternatively be a device of the unmanned aerial vehicle. Alternatively, the terminal device may be a vehicle-mounted device, for example, may be a driving computer having a wireless communication function, or a wireless terminal externally connected to a driving computer. Alternatively, the terminal device may alternatively be a roadside device, for example, may be a street lamp with a wireless communication function, a signal lamp, another roadside device, or the like.

In an embodiment of the present disclosure, the first terminal device may be a receiving terminal device, and the second terminal device may be a sending terminal device. The second terminal device may send data and/or information to the first terminal device in any form of multicast, unicast, or broadcast.

In an embodiment of the present disclosure, the data and/or the information may be transmitted via a physical sidelink shared channel (PSSCH) in the SL channel.

It should be noted that, in an embodiment of the present disclosure, the sending of the data and/or the information by the second terminal device may be specifically new transmission of the data and/or the information. The new transmission specifically refers to initial transmission, i.e., specifically refers to initial transmission for certain data and/or information.

In step 102, it is determined whether to perform feedback for the data and/or the information.

In an embodiment of the present disclosure, the determining whether to perform feedback for the data and/or the information may include the following steps.

Step a: sidelink control information (SCI) sent by a second terminal device is received, in which the SCI may be configured to indicate whether the first terminal device requires to perform feedback for the received data and/or information.

In an embodiment of the present disclosure, the SCI may be transmitted via a physical sidelink control channel (PSCCH) in an SL channel.

Step b: it is determined whether to perform feedback for the data and/or the information based on the indication of the SCI.

In another embodiment of the present disclosure, the determining whether to perform feedback for the data and/or the information may further include:

whether to perform feedback for the data and/or the information is determined according to whether a resource pool corresponding to the received data and/or information is configured with a feedback resource. If the resource pool is configured with the feedback resource, it is determined to perform feedback for the received data and/or information; and if the resource pool is not configured with the feedback resource, it is determined to perform feedback for the received data and/or information.

In step 103, in response to determining not to perform feedback for the data and/or the information, a first retransmission timer is started.

In an embodiment of the present disclosure, for the new transmission of the data and/or the information, after receiving the data and/or the information, the terminal device further requires to decode the received data and/or information. If the decoding succeeds, it is considered that the data and/or the information reception succeeds. If the decoding fails, it is considered that the data and/or the information reception fails, and at this time, the first retransmission timer needs to be started to retransmit the data and/or the information.

The embodiments of the present disclosure mainly provide a specific method for starting the first retransmission timer for the case that "the first terminal device does not perform feedback for the data and/or the information received in new transmission". The specific method for starting the first retransmission timer will be described in detail in the following embodiments.

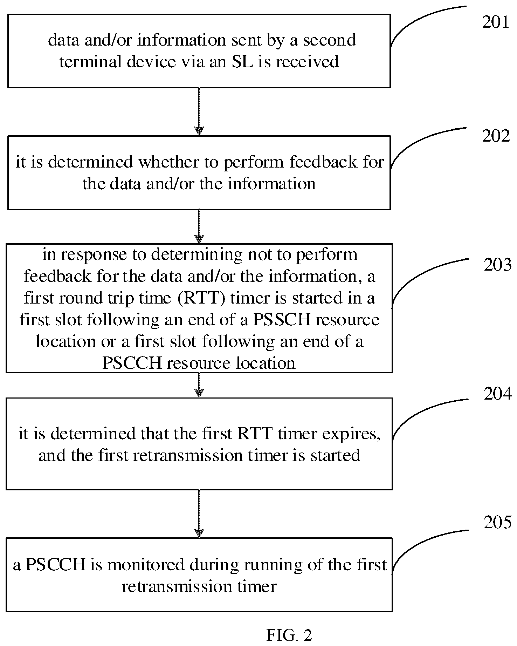

Further, it should be noted that, in an embodiment of the present disclosure, a method for starting a retransmission timer (such as a first retransmission timer, a second retransmission timer, or a third retransmission timer) may include the method shown in any one of FIGS. 2-12. The method may be configured for the first terminal device by the base station or the second terminal device, and at the same time, the base station or the second terminal device may further configure, for the first terminal device, that each method is applied in a case of performing feedback or in a case of not performing feedback. Therefore, the first terminal device may determine the method for starting a retransmission timer based on the configuration of the base station or the second terminal device.

In step 104, a PSCCH is monitored during running of the first retransmission timer.

In an embodiment of the present disclosure, during the running of the first retransmission timer, the PSCCH is monitored, and the data and/or the information retransmitted by the second terminal device may be received, so that a success rate of retransmission can be ensured.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide a method for starting a timer for the case that the first terminal device does not perform feedback.

FIG. 2 is a schematic flowchart of a method for starting a timer provided by an embodiment of the present disclosure. The method is applied to a first terminal device, and as shown in FIG. 2, the method for starting a timer may include the following steps.

In step 201, data and/or information sent by a second terminal device via an SL is received.

In step 202, it is determined whether to perform feedback for the data and/or the information.

In step 203, in response to determining not to perform feedback for the data and/or the information, a first round trip time (RTT) timer is started in a first slot following an end of a PSSCH resource location or a first slot following an end of a PSCCH resource location.

In step 204, it is determined that the first RTT timer expires, and the first retransmission timer is started.

In step 205, a PSCCH is monitored during running of the first retransmission timer.

For other detailed descriptions of steps 201 to 205, reference may be made to the description of the foregoing embodiments, and details are not described herein again in the embodiments of the present disclosure.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide a method for starting a timer for the case that the first terminal device does not perform feedback.

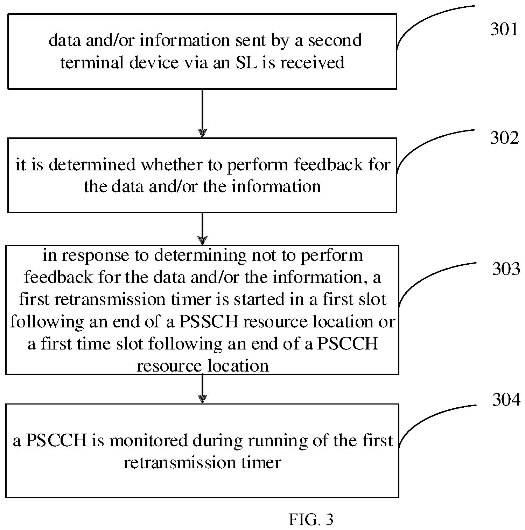

FIG. 3 is a schematic flowchart of a method for starting a timer provided by an embodiment of the present disclosure. The method is applied to a first terminal device, and as shown in FIG. 3, the method for starting a timer may include the following steps.

In step 301, data and/or information sent by a second terminal device via an SL is received.

In step 302, it is determined whether to perform feedback for the data and/or the information.

In step 303, in response to determining not to perform feedback for the data and/or the information, a first retransmission timer is started in a first slot following an end of a PSSCH resource location or a first time slot following an end of a PSCCH resource location.

In step 304, a PSCCH is monitored during running of the first retransmission timer.

For other detailed descriptions of steps 301 to 304, reference may be made to the description of the foregoing embodiments, and details are not described herein again in the embodiments of the present disclosure.

In summary, in the method for starting a timer provided by the embodiments of the present disclosure, the first terminal device receives the data and/or the information sent by the second terminal device via the SL, determines whether to perform feedback for the data and/or the information, and starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

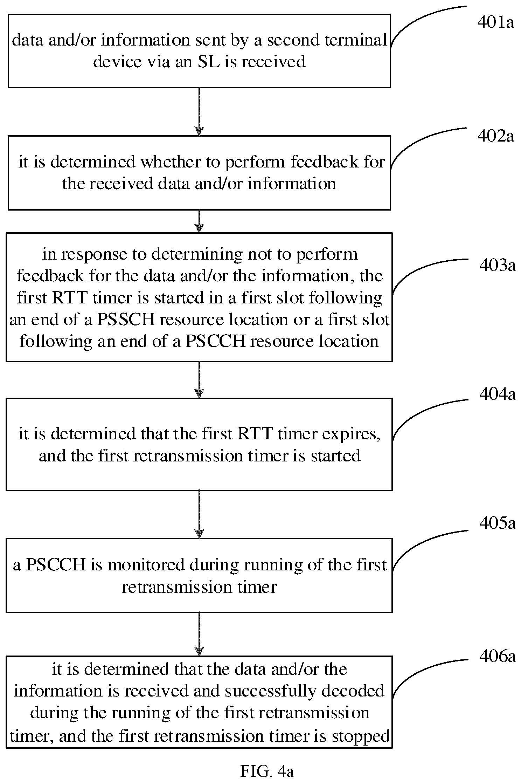

FIG. 4a is a schematic flowchart of a method for starting a timer provided by an embodiment of the present disclosure. The method is applied to a first terminal device, and as shown in FIG. 4a, the method for starting a timer may include the following steps.

In step 401a, data and/or information sent by a second terminal device via an SL is received.

In step 402a, it is determined whether to perform feedback for the received data and/or information.

In step 403a, in response to determining not to perform feedback for the data and/or the information, the first RTT timer is started in a first slot following an end of a PSSCH resource location or a first slot following an end of a PSCCH resource location.

In step 404a, it is determined that the first RTT timer expires, and the first retransmission timer is started.

In step 405a, a PSCCH is monitored during running of the first retransmission timer.

For other detailed descriptions of steps 401a-405a, reference may be made to the description of the foregoing embodiments, and details are not described herein again in the embodiments of the present disclosure.

In step 406a, it is determined that the data and/or the information is received and successfully decoded during the running of the first retransmission timer, and the first retransmission timer is stopped.

In an embodiment of the present disclosure, if the data and/or the information is received and successfully decoded during the running of the first retransmission timer, it indicates that the data and/or the information is successfully received by the first terminal device, and at this time, the first retransmission timer may be stopped to end retransmission.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

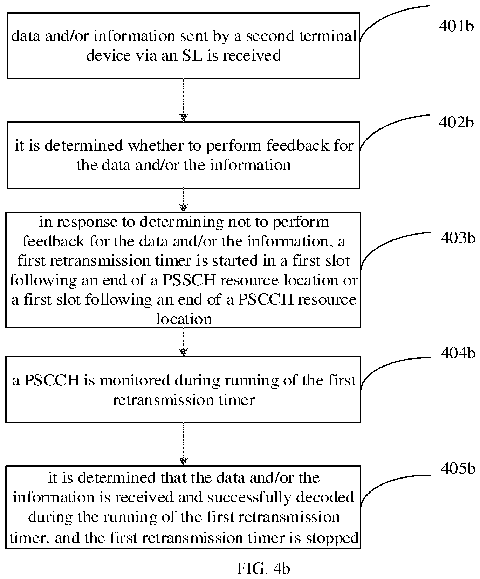

FIG. 4b is a schematic flowchart of a method for starting a timer provided by an embodiment of the present disclosure. The method is applied to a first terminal device, and as shown in FIG. 4b, the method for starting a timer may include the following steps.

In step 401b, data and/or information sent by a second terminal device via an SL is received.

In step 402b, it is determined whether to perform feedback for the data and/or the information.

In step 403b, in response to determining not to perform feedback for the data and/or the information, a first retransmission timer is started in a first slot following an end of a PSSCH resource location or a first slot following an end of a PSCCH resource location.

In step 404b, a PSCCH is monitored during running of the first retransmission timer.

In step 405b, it is determined that the data and/or the information is received and successfully decoded during the running of the first retransmission timer, and the first retransmission timer is stopped.

For other detailed descriptions of steps 401b to 405b, reference may be made to the description of the foregoing embodiments, and details are not described herein again in the embodiments of the present disclosure.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

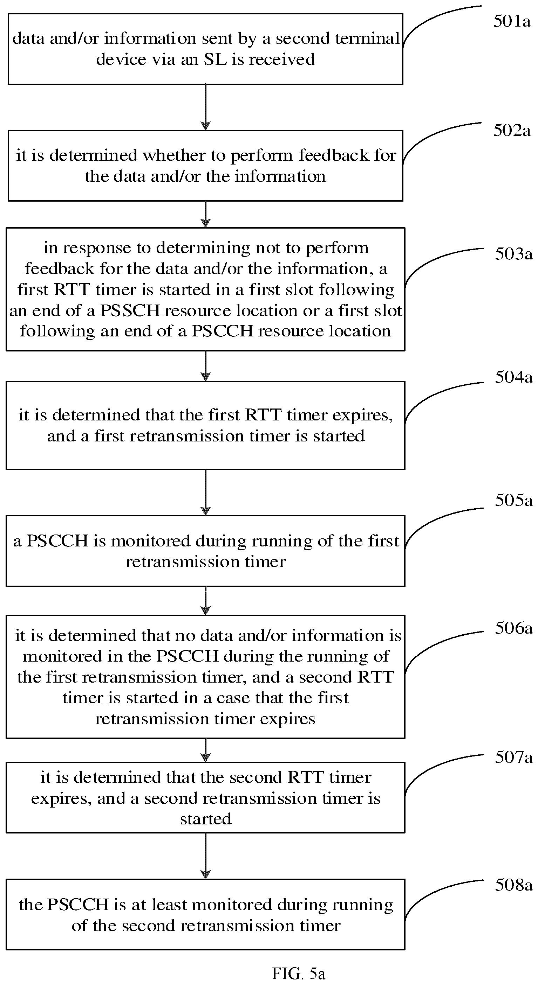

FIG. 5a is a schematic flowchart of a method for starting a timer provided by an embodiment of the present disclosure. The method is applied to a first terminal device, and as shown in FIG. 5a, the method for starting a timer may include the following steps.

In step 501a, data and/or information sent by a second terminal device via an SL is received.

In step 502a, it is determined whether to perform feedback for the data and/or the information.

In step 503a, in response to determining not to perform feedback for the data and/or the information, a first RTT timer is started in a first slot following an end of a PSSCH resource location or a first slot following an end of a PSCCH resource location.

In step 504a, it is determined that the first RTT timer expires, and a first retransmission timer is started.

In step 505a, a PSCCH is monitored during running of the first retransmission timer.

For other detailed descriptions of steps 501a to 505a, reference may be made to the description of the foregoing embodiments, and details are not described herein again in the embodiments of the present disclosure.

In step 506a, it is determined that no data and/or information is monitored in the PSCCH during the running of the first retransmission timer, and a second RTT timer is started in a case that the first retransmission timer expires.

In step 507a, it is determined that the second RTT timer expires, and a second retransmission timer is started.

In step 508a, the PSCCH is at least monitored during running of the second retransmission timer.

In an embodiment of the present disclosure, in a case that the data and/or the information in the PSCCH is not monitored during the running of the first retransmission timer, it indicates that the first terminal device does not receive the data and/or the information retransmitted by the second terminal device. In order to further prolong retransmission time and avoid transmission failure, when the first retransmission timer expires, the second RTT timer is started, and in response to determining that the second RTT timer expires, the second retransmission timer is restarted, and the PSCCH is continuously monitored during the running of the second retransmission timer, so as to improve the success rate of retransmission.

In an embodiment of the present disclosure, the second RTT timer may be an RTT timer. In an embodiment of the present disclosure, the first RTT timer and the second RTT timer may be the same or different, and the first retransmission timer and the second retransmission timer may be the same or different.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

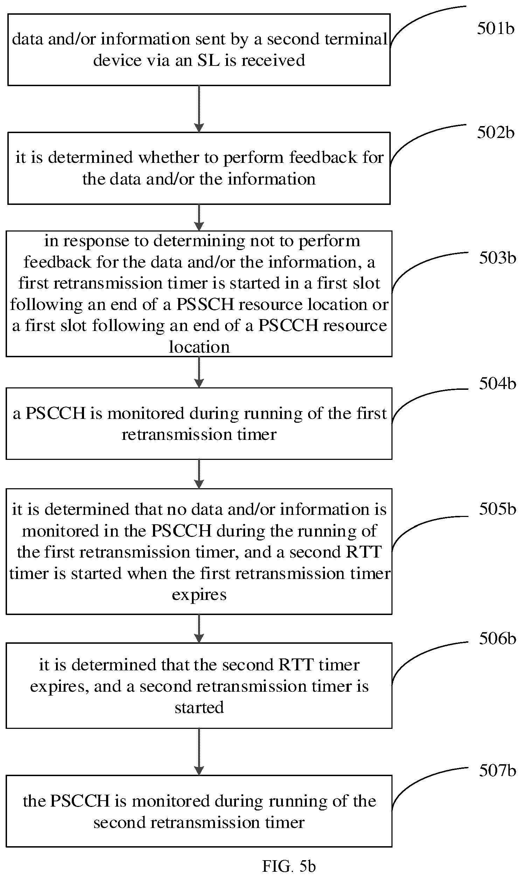

FIG. 5b is a schematic flowchart of a method for starting a timer provided by an embodiment of the present disclosure. The method is applied to a first terminal device, and as shown in FIG. 5b, the method for starting a timer may include the following steps.

In step 501b, data and/or information sent by a second terminal device via an SL is received.

In step 502b, it is determined whether to perform feedback for the data and/or the information.

In step 503b, in response to determining not to perform feedback for the data and/or the information, a first retransmission timer is started in a first slot following an end of a PSSCH resource location or a first slot following an end of a PSCCH resource location.

In step 504b, a PSCCH is monitored during running of the first retransmission timer.

In step 505b, it is determined that no data and/or information is monitored in the PSCCH during the running of the first retransmission timer, and a second RTT timer is started when the first retransmission timer expires.

In step 506b, it is determined that the second RTT timer expires, and a second retransmission timer is started.

In step 507b, the PSCCH is monitored during running of the second retransmission timer.

For other detailed descriptions of steps 501b to 507b, reference may be made to the description of the foregoing embodiments, and details are not described herein again in the embodiments of the present disclosure.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

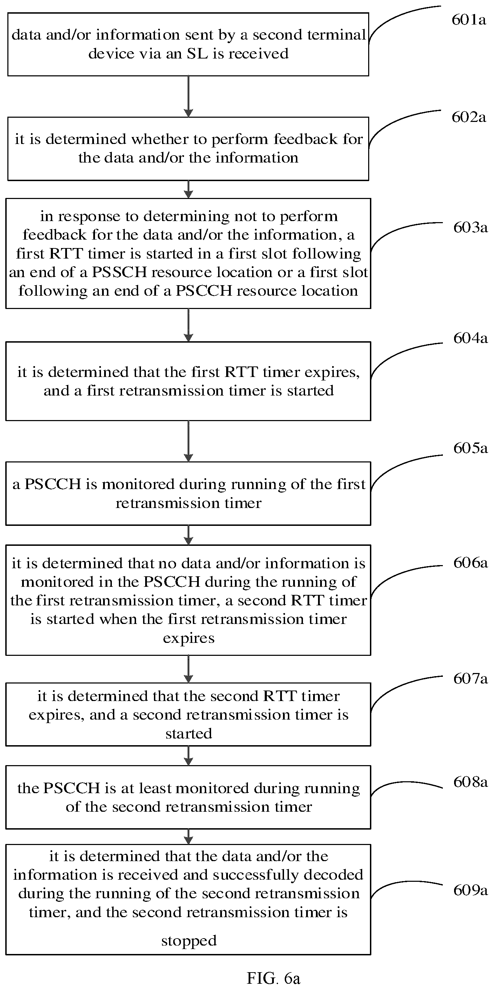

FIG. 6a is a schematic flowchart of a method for starting a timer provided by an embodiment of the present disclosure. The method is applied to a first terminal device, and as shown in FIG. 6a, the method for starting a timer may include the following steps.

In step 601a, data and/or information sent by a second terminal device via an SL is received.

In step 602a, it is determined whether to perform feedback for the data and/or the information.

In step 603a, in response to determining not to perform feedback for the data and/or the information, a first RTT timer is started in a first slot following an end of a PSSCH resource location or a first slot following an end of a PSCCH resource location.

In step 604a, it is determined that the first RTT timer expires, and a first retransmission timer is started.

In step 605a, a PSCCH is monitored during running of the first retransmission timer.

In step 606a, it is determined that no data and/or information is monitored in the PSCCH during the running of the first retransmission timer, a second RTT timer is started when the first retransmission timer expires.

In step 607a, it is determined that the second RTT timer expires, and a second retransmission timer is started.

In step 608a, the PSCCH is at least monitored during running of the second retransmission timer.

For other detailed descriptions of steps 601a to 608a, reference may be made to the description of the foregoing embodiments, and details are not described herein again in the embodiments of the present disclosure.

In step 609a, it is determined that the data and/or the information is received and successfully decoded during the running of the second retransmission timer, and the second retransmission timer is stopped.

In an embodiment of the present disclosure, if the data and/or the information is received and successfully decoded during the running of the second retransmission timer, it indicates that the data and/or the information is successfully received by the first terminal device, and at this time, the second retransmission timer may be stopped to end retransmission.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

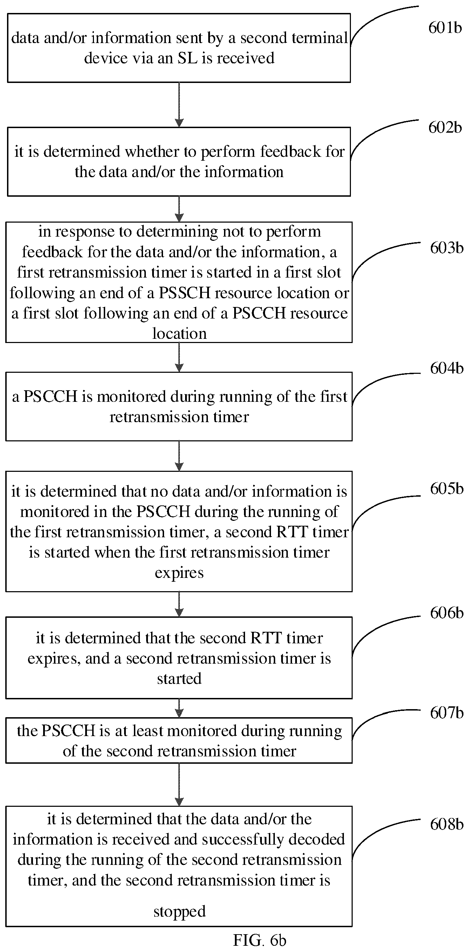

FIG. 6b is a schematic flowchart of a method for starting a timer provided by an embodiment of the present disclosure. The method is applied to a first terminal device, and as shown in FIG. 6b, the method for starting a timer may include the following steps.

In step 601b, data and/or information sent by a second terminal device via an SL is received.

In step 602b, it is determined whether to perform feedback for the data and/or the information.

In step 603b, in response to determining not to perform feedback for the data and/or the information, a first retransmission timer is started in a first slot following an end of a PSSCH resource location or a first slot following an end of a PSCCH resource location.

In step 604b, a PSCCH is monitored during running of the first retransmission timer.

In step 605b, it is determined that no data and/or information is monitored in the PSCCH during the running of the first retransmission timer, a second RTT timer is started when the first retransmission timer expires.

In step 606b, it is determined that the second RTT timer expires, and a second retransmission timer is started.

In step 607b, the PSCCH is at least monitored during running of the second retransmission timer.

In step 608b, it is determined that the data and/or the information is received and successfully decoded during the running of the second retransmission timer, and the second retransmission timer is stopped.

For other detailed descriptions of steps 601b to 608b, reference may be made to the description of the foregoing embodiments, and details are not described herein again in the embodiments of the present disclosure.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

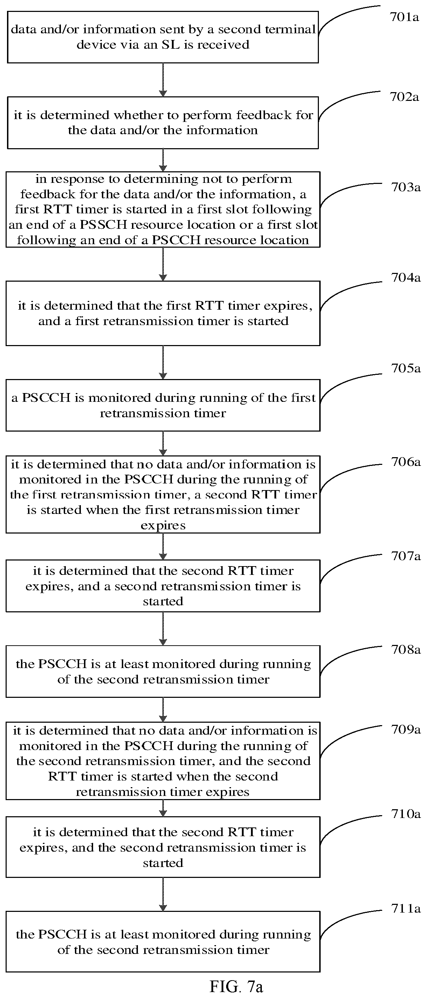

FIG. 7a is a schematic flowchart of a method for starting a timer provided by an embodiment of the present disclosure. The method is applied to a first terminal device, and as shown in FIG. 7a, the method for starting a timer may include the following steps.

In step 701a, data and/or information sent by a second terminal device via an SL is received.

In step 702a, it is determined whether to perform feedback for the data and/or the information.

In step 703a, in response to determining not to perform feedback for the data and/or the information, a first RTT timer is started in a first slot following an end of a PSSCH resource location or a first slot following an end of a PSCCH resource location.

In step 704a, it is determined that the first RTT timer expires, and a first retransmission timer is started.

In step 705a, a PSCCH is monitored during running of the first retransmission timer.

In step 706a, it is determined that no data and/or information is monitored in the PSCCH during the running of the first retransmission timer, a second RTT timer is started when the first retransmission timer expires.

In step 707a, it is determined that the second RTT timer expires, and a second retransmission timer is started.

In step 708a, the PSCCH is at least monitored during running of the second retransmission timer.

In step 709a, it is determined that no data and/or information is monitored in the PSCCH during the running of the second retransmission timer, and the second RTT timer is started when the second retransmission timer expires.

In step 710a, it is determined that the second RTT timer expires, and the second retransmission timer is started.

In step 711a, the PSCCH is at least monitored during running of the second retransmission timer.

In an embodiment of the present disclosure, the above steps 709a to 711a may be cyclically performed.

For other detailed descriptions of steps 701a to 711a, reference may be made to the foregoing embodiments, and details are not described herein. In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

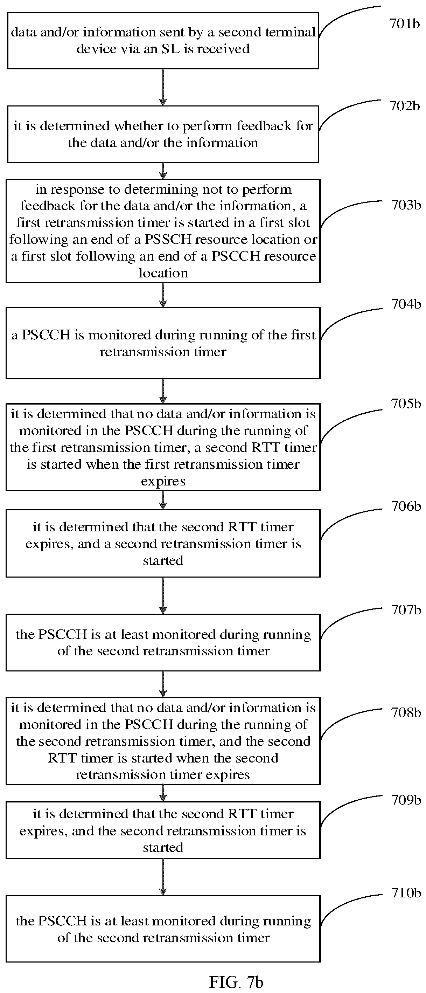

FIG. 7b is a schematic flowchart of a method for starting a timer provided by an embodiment of the present disclosure. The method is applied to a first terminal device, and as shown in FIG. 7b, and the method for starting a timer may include the following steps.

In Step 701b, data and/or information sent by a second terminal device via an SL is received.

In step 702b, it is determined whether to perform feedback for the data and/or the information.

In step 703b, in response to determining not to perform feedback for the data and/or the information, a first retransmission timer is started in a first slot following an end of a PSSCH resource location or a first slot following an end of a PSCCH resource location.

In step 704b, a PSCCH is monitored during running of the first retransmission timer.

In step 705b, it is determined that no data and/or information is monitored in the PSCCH during the running of the first retransmission timer, a second RTT timer is started when the first retransmission timer expires.

In step 706b, it is determined that the second RTT timer expires, and a second retransmission timer is started.

In step 707b, the PSCCH is at least monitored during running of the second retransmission timer.

In step 708b, it is determined that no data and/or information is monitored in the PSCCH during the running of the second retransmission timer, and the second RTT timer is started when the second retransmission timer expires.

In step 709b, it is determined that the second RTT timer expires, and the second retransmission timer is started.

In step 710b, the PSCCH is at least monitored during running of the second retransmission timer.

In an embodiment of the present disclosure, steps 708b to 710b may be performed cyclically.

For other detailed descriptions of steps 701b to 710b, reference may be made to the description of the foregoing embodiments, and details are not described herein again in the embodiments of the present disclosure.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

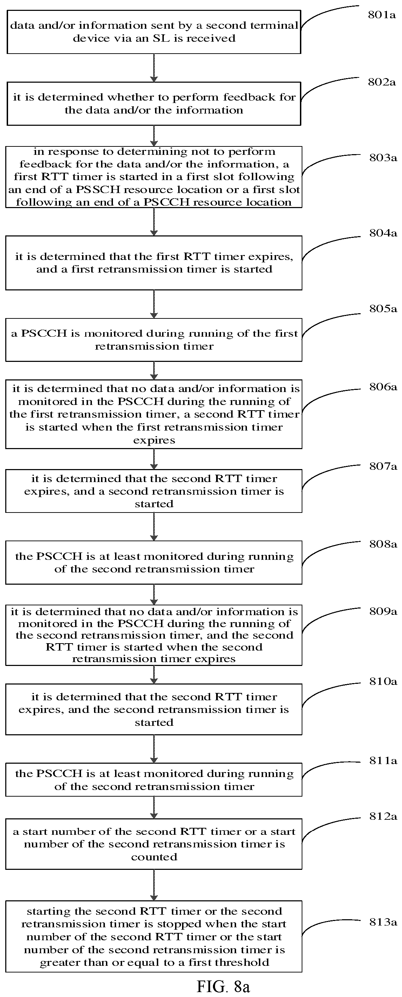

FIG. 8a is a schematic flowchart of a method for starting a timer provided by an embodiment of the present disclosure. The method is applied to a first terminal device, and as shown in FIG. 8a, the method for starting a timer may include the following steps.

In step 801a, data and/or information sent by a second terminal device via an SL is received.

In step 802a, it is determined whether to perform feedback for the data and/or the information.

In step 803a, in response to determining not to perform feedback for the data and/or the information, a first RTT timer is started in a first slot following an end of a PSSCH resource location or a first slot following an end of a PSCCH resource location.

In step 804a, it is determined that the first RTT timer expires, and a first retransmission timer is started.

In step 805a, a PSCCH is monitored during running of the first retransmission timer.

For other detailed descriptions of steps 801a to 805a, reference may be made to the description of the foregoing embodiments, and details are not described herein again in the embodiments of the present disclosure.

In step 806a, it is determined that no data and/or information is monitored in the PSCCH during the running of the first retransmission timer, a second RTT timer is started when the first retransmission timer expires.

In step 807a, it is determined that the second RTT timer expires, and a second retransmission timer is started.

In step 808a, the PSCCH is at least monitored during running of the second retransmission timer.

In step 809a, it is determined that no data and/or information is monitored in the PSCCH during the running of the second retransmission timer, and the second RTT timer is started when the second retransmission timer expires.

In step 810a, it is determined that the second RTT timer expires, and the second retransmission timer is started.

In step 811a, the PSCCH is at least monitored during running of the second retransmission timer.

In step 812a, a start number of the second RTT timer or a start number of the second retransmission timer is counted.

In step 813a, starting the second RTT timer or the second retransmission timer is stopped when the start number of the second RTT timer or the start number of the second retransmission timer is greater than or equal to a first threshold.

In an embodiment of the present disclosure, the first threshold may be configured by the second terminal device through a sidelink radio resource control (RRC) message, or may be configured by a base station through an air (Uu) RRC message.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

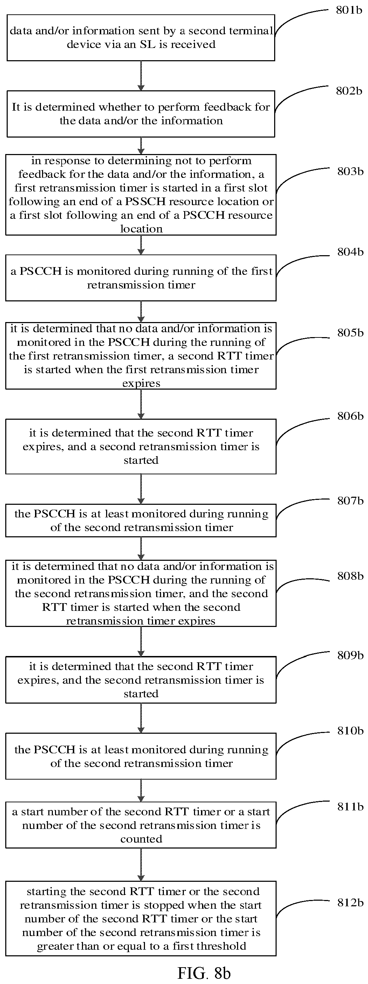

FIG. 8b is a schematic flowchart of a method for starting a timer provided by an embodiment of the present disclosure. The method is applied to a first terminal device, and as shown in FIG. 8b, the method for starting a timer may include the following steps.

In step 801b, data and/or information sent by a second terminal device via an SL is received.

In step 802b: It is determined whether to perform feedback for the data and/or the information.

In step 803b, in response to determining not to perform feedback for the data and/or the information, a first retransmission timer is started in a first slot following an end of a PSSCH resource location or a first slot following an end of a PSCCH resource location.

In step 804b, a PSCCH is monitored during running of the first retransmission timer.

In step 805b, it is determined that no data and/or information is monitored in the PSCCH during the running of the first retransmission timer, a second RTT timer is started when the first retransmission timer expires.

In step 806b, it is determined that the second RTT timer expires, and a second retransmission timer is started.

In step 807b, the PSCCH is at least monitored during running of the second retransmission timer.

In step 808b, it is determined that no data and/or information is monitored in the PSCCH during the running of the second retransmission timer, and the second RTT timer is started when the second retransmission timer expires.

In step 809b, it is determined that the second RTT timer expires, and the second retransmission timer is started.

In step 810b, the PSCCH is at least monitored during running of the second retransmission timer.

In step 811b, a start number of the second RTT timer or a start number of the second retransmission timer is counted.

In step 812b, starting the second RTT timer or the second retransmission timer is stopped when the start number of the second RTT timer or the start number of the second retransmission timer is greater than or equal to a first threshold.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

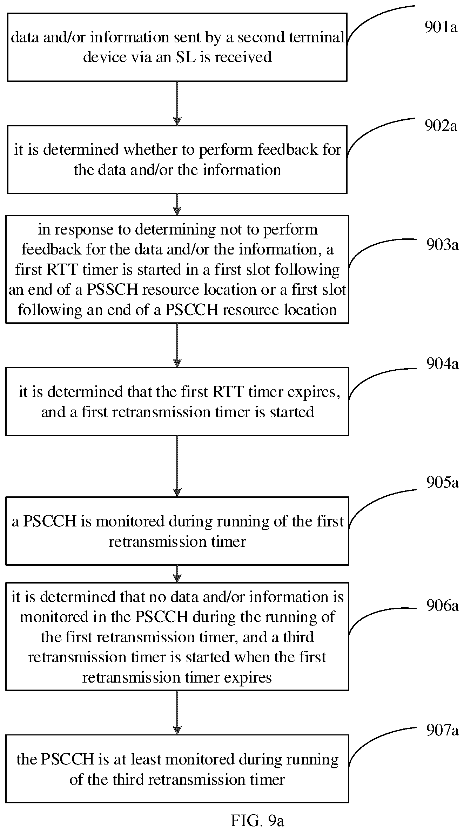

FIG. 9a is a schematic flowchart of a method for starting a timer provided by an embodiment of the present disclosure. The method is applied to a first terminal device, and as shown in FIG. 9a, the method for starting a timer may include the following steps.

In step 901a, data and/or information sent by a second terminal device via an SL is received.

In step 902a, it is determined whether to perform feedback for the data and/or the information.

In step 903a, in response to determining not to perform feedback for the data and/or the information, a first RTT timer is started in a first slot following an end of a PSSCH resource location or a first slot following an end of a PSCCH resource location.

In step 904a, it is determined that the first RTT timer expires, and a first retransmission timer is started.

In step 905a, a PSCCH is monitored during running of the first retransmission timer.

In step 906a, it is determined that no data and/or information is monitored in the PSCCH during the running of the first retransmission timer, and a third retransmission timer is started when the first retransmission timer expires.

In step 907a, the PSCCH is at least monitored during running of the third retransmission timer.

In an embodiment of the present disclosure, the first retransmission timer and the third retransmission timer may be the same or different.

In an embodiment of the present disclosure, if no data and/or information is monitored in the PSCCH during the running of the first retransmission timer, it indicates that the first terminal device side does not receive the data and/or the information retransmitted by the second terminal device. In order to further prolong retransmission time and avoid transmission failure, when the first retransmission timer expires, the third retransmission timer is started, and it is continued to at least monitor the PSCCH during the running of the third retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

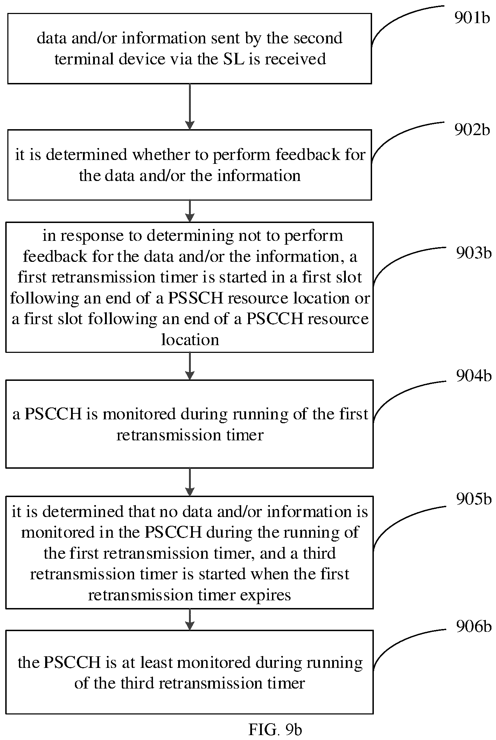

FIG. 9b is a schematic flowchart of a method for starting a timer provided by an embodiment of the present disclosure. The method is applied to a first terminal device, and as shown in FIG. 9b, the method for starting a timer may include the following steps.

In step 901b, data and/or information sent by the second terminal device via the SL is received.

In step 902b, it is determined whether to perform feedback for the data and/or the information.

In step 903b, in response to determining not to perform feedback for the data and/or the information, a first retransmission timer is started in a first slot following an end of a PSSCH resource location or a first slot following an end of a PSCCH resource location.

In step 904b, a PSCCH is monitored during running of the first retransmission timer.

In step 905b, it is determined that no data and/or information is monitored in the PSCCH during the running of the first retransmission timer, and a third retransmission timer is started when the first retransmission timer expires.

In step 906b, the PSCCH is at least monitored during running of the third retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide a method for starting a timer for the case that the first terminal device does not perform feedback.

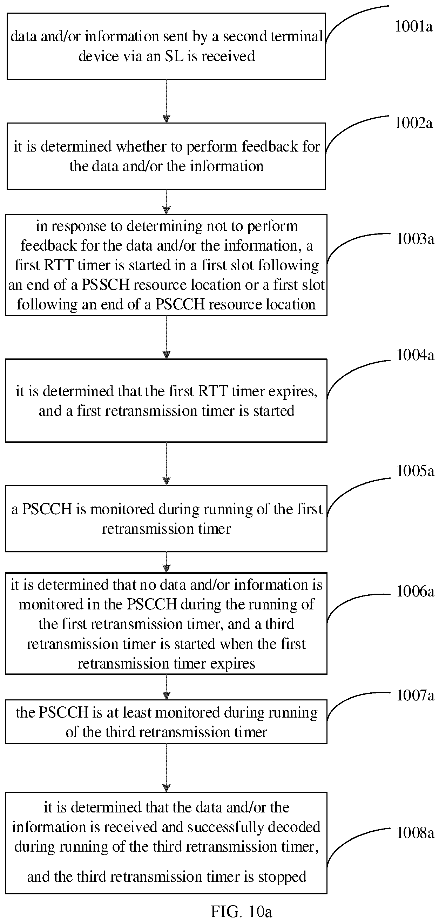

FIG. 10a is a schematic flowchart of a method for starting a timer provided by an embodiment of the present disclosure, applied to a first terminal device, and as shown in FIG. 10a, the method for starting a timer may include the following steps.

In step 1001a, data and/or information sent by a second terminal device via an SL is received.

In step 1002a, it is determined whether to perform feedback for the data and/or the information.

In step 1003a, in response to determining not to perform feedback for the data and/or the information, a first RTT timer is started in a first slot following an end of a PSSCH resource location or a first slot following an end of a PSCCH resource location.

In step 1004a, it is determined that the first RTT timer expires, and a first retransmission timer is started.

In step 1005a, a PSCCH is monitored during running of the first retransmission timer.

In step 1006a, it is determined that no data and/or information is monitored in the PSCCH during the running of the first retransmission timer, and a third retransmission timer is started when the first retransmission timer expires.

In step 1007a, the PSCCH is at least monitored during running of the third retransmission timer.

In step 1008a, it is determined that the data and/or the information is received and successfully decoded during running of the third retransmission timer, and the third retransmission timer is stopped.

In an embodiment of the present disclosure, if the data and/or the information is received and successfully decoded during the running of the third retransmission timer, it indicates that the data and/or the information is successfully received by the first terminal device, and at this time, the third retransmission timer may be stopped to end retransmission.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

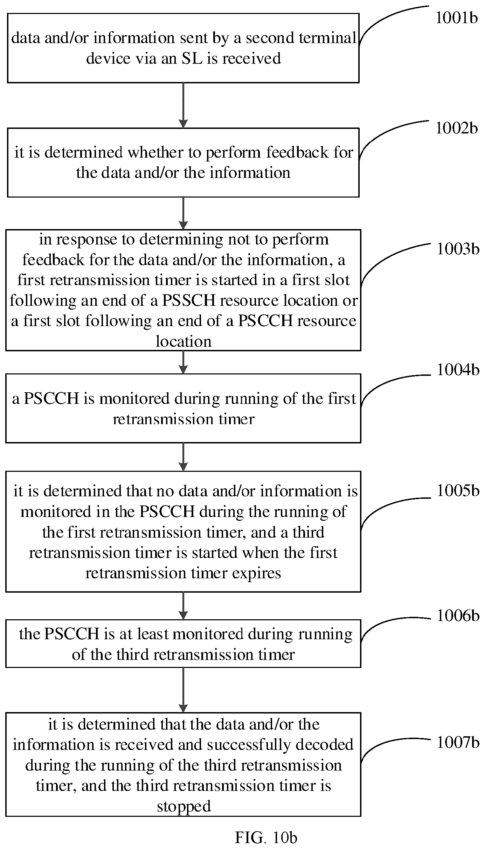

FIG. 10b is a schematic flowchart of a method for starting a timer provided by an embodiment of the present disclosure. The method is applied to a first terminal device, and as shown in FIG. 10b, the method for starting a timer may include the following steps.

In step 1001b, data and/or information sent by a second terminal device via an SL is received.

In step 1002b, it is determined whether to perform feedback for the data and/or the information.

In step 1003b, in response to determining not to perform feedback for the data and/or the information, a first retransmission timer is started in a first slot following an end of a PSSCH resource location or a first slot following an end of a PSCCH resource location.

In step 1004b, a PSCCH is monitored during running of the first retransmission timer.

In step 1005b, it is determined that no data and/or information is monitored in the PSCCH during the running of the first retransmission timer, and a third retransmission timer is started when the first retransmission timer expires.

In step 1006b, the PSCCH is at least monitored during running of the third retransmission timer.

In step 1007b, it is determined that the data and/or the information is received and successfully decoded during the running of the third retransmission timer, and the third retransmission timer is stopped.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

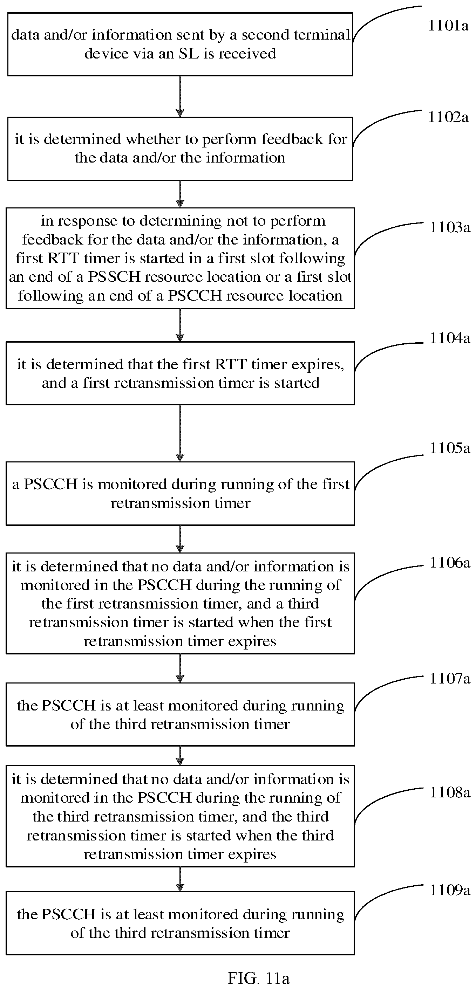

FIG. 11a is a schematic flowchart of a method for starting a timer provided by an embodiment of the present disclosure. The method is applied to a first terminal device, and as shown in FIG. 11a, the method for starting a timer may include the following steps.

In step 1101a, data and/or information sent by a second terminal device via an SL is received.

In step 1102a, it is determined whether to perform feedback for the data and/or the information.

In step 1103a, in response to determining not to perform feedback for the data and/or the information, a first RTT timer is started in a first slot following an end of a PSSCH resource location or a first slot following an end of a PSCCH resource location.

In step 1104a, it is determined that the first RTT timer expires, and a first retransmission timer is started.

In step 1105a, a PSCCH is monitored during running of the first retransmission timer.

In step 1106a, it is determined that no data and/or information is monitored in the PSCCH during the running of the first retransmission timer, and a third retransmission timer is started when the first retransmission timer expires.

In step 1107a, the PSCCH is at least monitored during running of the third retransmission timer.

In step 1108a, it is determined that no data and/or information is monitored in the PSCCH during the running of the third retransmission timer, and the third retransmission timer is started when the third retransmission timer expires.

In step 1109a, the PSCCH is at least monitored during running of the third retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

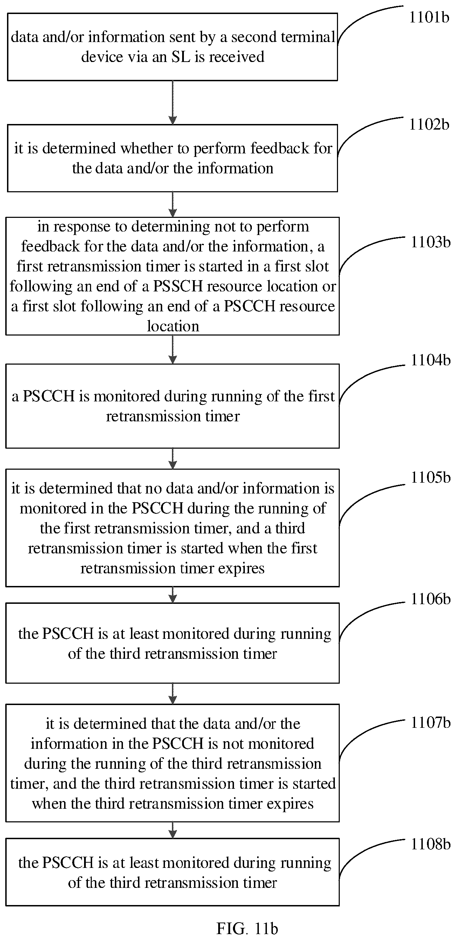

FIG. 11b is a schematic flowchart of a method for starting a timer provided by an embodiment of the present disclosure. The method is applied to a first terminal device, and as shown in FIG. 11b, the method for starting a timer may include the following steps.

In step 1 101b, data and/or information sent by a second terminal device via an SL is received.

In step 1102b, it is determined whether to perform feedback for the data and/or the information.

In step 1103b, in response to determining not to perform feedback for the data and/or the information, a first retransmission timer is started in a first slot following an end of a PSSCH resource location or a first slot following an end of a PSCCH resource location.

In step 1104b, a PSCCH is monitored during running of the first retransmission timer.

In step 1105b, it is determined that no data and/or information is monitored in the PSCCH during the running of the first retransmission timer, and a third retransmission timer is started when the first retransmission timer expires.

In step 1106b, the PSCCH is at least monitored during running of the third retransmission timer.

In step 1107b, it is determined that the data and/or the information in the PSCCH is not monitored during the running of the third retransmission timer, and the third retransmission timer is started when the third retransmission timer expires.

In step 1108b, the PSCCH is at least monitored during running of the third retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

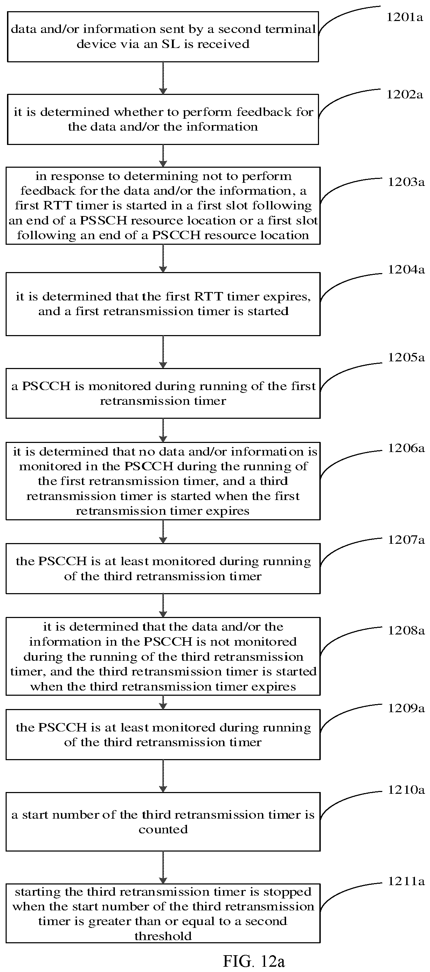

FIG. 12a is a schematic flowchart of a method for starting a timer provided by an embodiment of the present disclosure. The method is applied to a first terminal device, as shown in FIG. 12a, the method for starting a timer may include the following steps.

In step 1201a, data and/or information sent by a second terminal device via an SL is received.

In step 1202a, it is determined whether to perform feedback for the data and/or the information.

In step 1203a, in response to determining not to perform feedback for the data and/or the information, a first RTT timer is started in a first slot following an end of a PSSCH resource location or a first slot following an end of a PSCCH resource location.

In step 1204a, it is determined that the first RTT timer expires, and a first retransmission timer is started.

In step 1205a, a PSCCH is monitored during running of the first retransmission timer.

In step 1206a, it is determined that no data and/or information is monitored in the PSCCH during the running of the first retransmission timer, and a third retransmission timer is started when the first retransmission timer expires.

In step 1207a, the PSCCH is at least monitored during running of the third retransmission timer.

In step 1208a, it is determined that the data and/or the information in the PSCCH is not monitored during the running of the third retransmission timer, and the third retransmission timer is started when the third retransmission timer expires.

In step 1209a, the PSCCH is at least monitored during running of the third retransmission timer.

In step 1210a, a start number of the third retransmission timer is counted.

In step 1211a, starting the third retransmission timer is stopped when the start number of the third retransmission timer is greater than or equal to a second threshold.

In an embodiment of the present disclosure, the second threshold may be configured by the second terminal device through a sidelink RRC message, or may be configured by a base station through a Uu RRC message.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

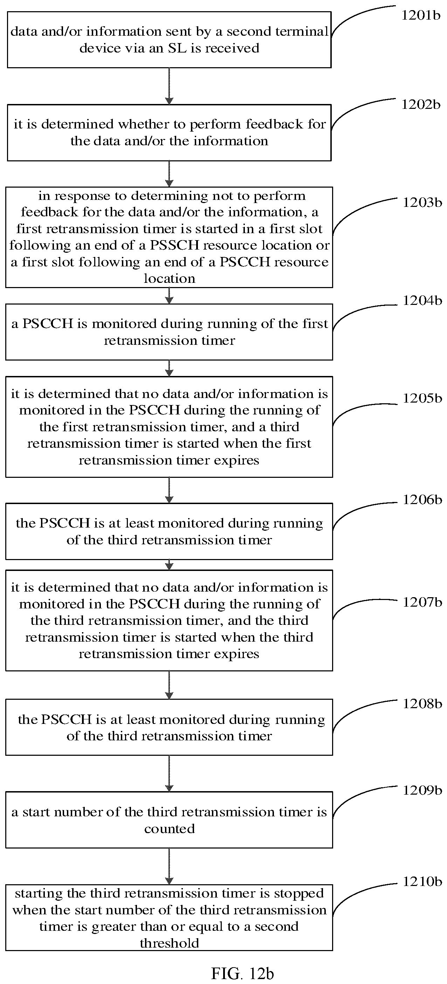

FIG. 12b is a schematic flowchart of a method for starting a timer provided by an embodiment of the present disclosure. The method is applied to a first terminal device, and as shown in FIG. 12b, the method for starting a timer may include the following steps.

In step 1201b, data and/or information sent by a second terminal device via an SL is received.

In step 1202b, it is determined whether to perform feedback for the data and/or the information.

In step 1203b, in response to determining not to perform feedback for the data and/or the information, a first retransmission timer is started in a first slot following an end of a PSSCH resource location or a first slot following an end of a PSCCH resource location.

In step 1204b, a PSCCH is monitored during running of the first retransmission timer.

In step 1205b, it is determined that no data and/or information is monitored in the PSCCH during the running of the first retransmission timer, and a third retransmission timer is started when the first retransmission timer expires.

In step 1206b, the PSCCH is at least monitored during running of the third retransmission timer.

In step 1207b, it is determined that no data and/or information is monitored in the PSCCH during the running of the third retransmission timer, and the third retransmission timer is started when the third retransmission timer expires.

In step 1208b, the PSCCH is at least monitored during running of the third retransmission timer.

In step 1209b, a start number of the third retransmission timer is counted.

In step 1210b, starting the third retransmission timer is stopped when the start number of the third retransmission timer is greater than or equal to a second threshold.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

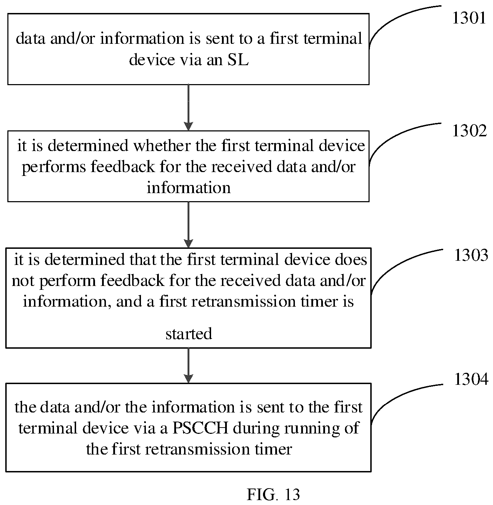

FIG. 13 is a schematic flowchart of a method for starting a timer provided by an embodiment of the present disclosure. The method is applied to a second terminal device, and as shown in FIG. 13, the method for starting a timer may include the following steps.

In step 1301, data and/or information is sent to a first terminal device via an SL.

In step 1302, it is determined whether the first terminal device performs feedback for the received data and/or information.

In step 1303, it is determined that the first terminal device does not perform feedback for the received data and/or information, and a first retransmission timer is started.

In step 1304, the data and/or the information is sent to the first terminal device via a PSCCH during running of the first retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

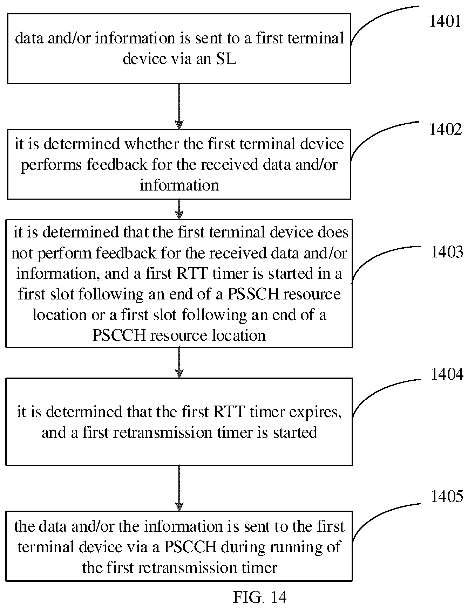

FIG. 14 is a schematic flowchart of a method for starting a timer provided by an embodiment of the present disclosure. The method is applied to a second terminal device, and as shown in FIG. 14, the method for starting a timer may include the following steps.

In step 1401, data and/or information is sent to a first terminal device via an SL.

In step 1402, it is determined whether the first terminal device performs feedback for the received data and/or information.

In step 1403, it is determined that the first terminal device does not perform feedback for the received data and/or information, and a first RTT timer is started in a first slot following an end of a PSSCH resource location or a first slot following an end of a PSCCH resource location.

In step 1404, it is determined that the first RTT timer expires, and a first retransmission timer is started.

In step 1405, the data and/or the information is sent to the first terminal device via a PSCCH during running of the first retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

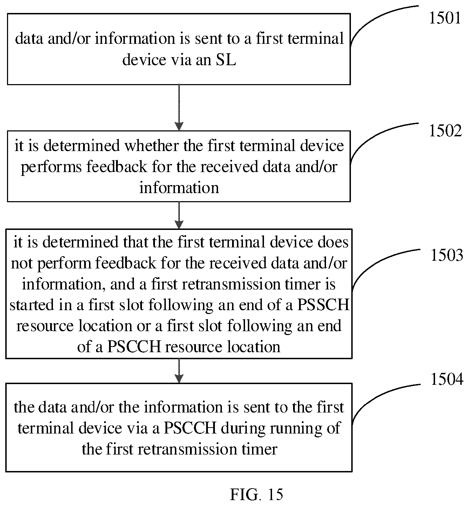

FIG. 15 is a schematic flowchart of a method for starting a timer provided by an embodiment of the present disclosure. The method is applied to a second terminal device, and as shown in FIG. 15, the method for starting a timer may include the following steps.

In step 1501, data and/or information is sent to a first terminal device via an SL.

In step 1502, it is determined whether the first terminal device performs feedback for the received data and/or information.

In step 1503, it is determined that the first terminal device does not perform feedback for the received data and/or information, and a first retransmission timer is started in a first slot following an end of a PSSCH resource location or a first slot following an end of a PSCCH resource location.

In step 1504, the data and/or the information is sent to the first terminal device via a PSCCH during running of the first retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

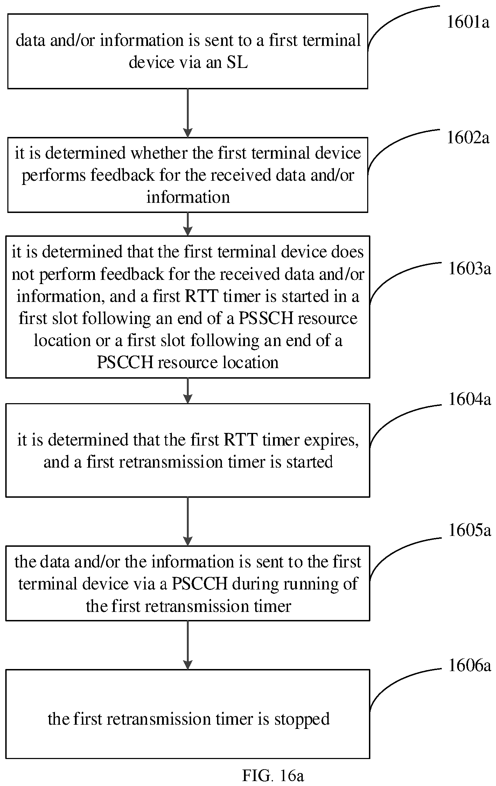

FIG. 16a is a schematic flowchart of a method for starting a timer provided by an embodiment of the present disclosure. The method is applied to a second terminal device, and as shown in FIG. 16a, the method for starting a timer may include the following steps.

In step 1601a, data and/or information is sent to a first terminal device via an SL.

In step 1602a, it is determined whether the first terminal device performs feedback for the received data and/or information.

In step 1603a, it is determined that the first terminal device does not perform feedback for the received data and/or information, and a first RTT timer is started in a first slot following an end of a PSSCH resource location or a first slot following an end of a PSCCH resource location.

In step 1604a, it is determined that the first RTT timer expires, and a first retransmission timer is started.

In step 1605a, the data and/or the information is sent to the first terminal device via a PSCCH during running of the first retransmission timer.

In step 1606a, the first retransmission timer is stopped.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

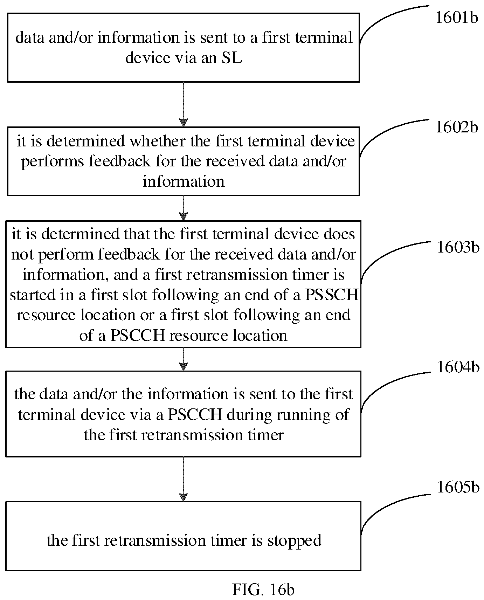

FIG. 16b is a schematic flowchart of a method for starting a timer provided by an embodiment of the present disclosure. The method is applied to a second terminal device, and as shown in FIG. 16b, the method for starting a timer may include the following steps.

In step 1601b, data and/or information is sent to a first terminal device via an SL.

In step 1602b, it is determined whether the first terminal device performs feedback for the received data and/or information.

In step 1603b, it is determined that the first terminal device does not perform feedback for the received data and/or information, and a first retransmission timer is started in a first slot following an end of a PSSCH resource location or a first slot following an end of a PSCCH resource location.

In step 1604b, the data and/or the information is sent to the first terminal device via a PSCCH during running of the first retransmission timer.

In step 1605b, the first retransmission timer is stopped.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

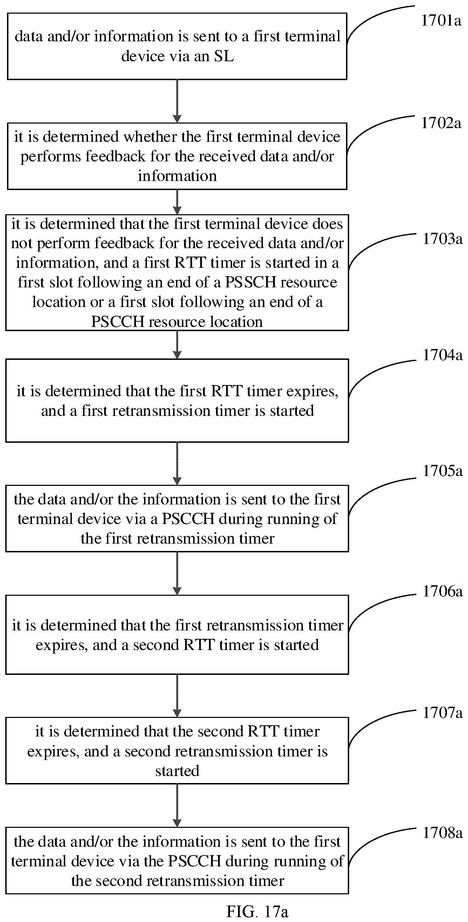

FIG. 17a is a schematic flowchart of a method for starting a timer provided by an embodiment of the present disclosure. The method is applied to a second terminal device, and as shown in FIG. 17a, the method for starting a timer may include the following steps.

In step 1701a, data and/or information is sent to a first terminal device via an SL.

In step 1702a, it is determined whether the first terminal device performs feedback for the received data and/or information.

In step 1703a, it is determined that the first terminal device does not perform feedback for the received data and/or information, and a first RTT timer is started in a first slot following an end of a PSSCH resource location or a first slot following an end of a PSCCH resource location.

In step 1704a, it is determined that the first RTT timer expires, and a first retransmission timer is started.

In step 1705a, the data and/or the information is sent to the first terminal device via a PSCCH during running of the first retransmission timer.

In step 1706a, it is determined that the first retransmission timer expires, and a second RTT timer is started.

In step 1707a, it is determined that the second RTT timer expires, and a second retransmission timer is started.

In step 1708a, the data and/or the information is sent to the first terminal device via the PSCCH during running of the second retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

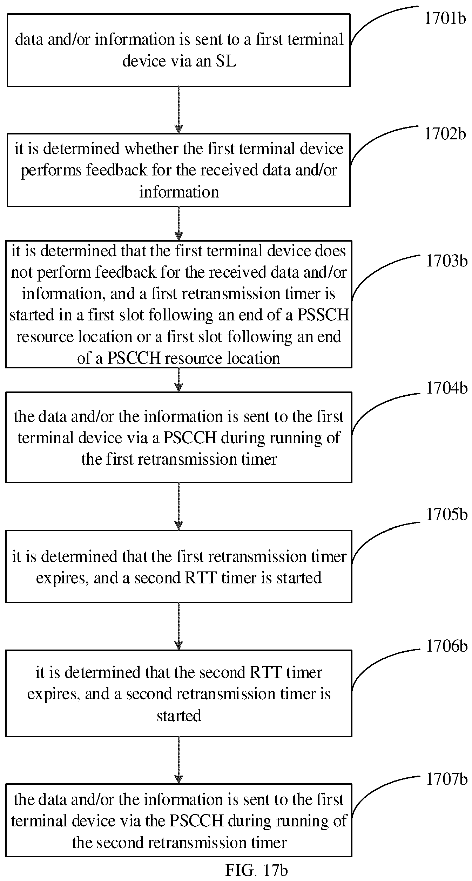

FIG. 17b is a schematic flowchart of a method for starting a timer provided by an embodiment of the present disclosure. The method is applied to a second terminal device, and as shown in FIG. 17b, the method for starting a timer may include the following steps.

In step 1701b, data and/or information is sent to a first terminal device via an SL.

In step 1702b, it is determined whether the first terminal device performs feedback for the received data and/or information.

In step 1703b, it is determined that the first terminal device does not perform feedback for the received data and/or information, and a first retransmission timer is started in a first slot following an end of a PSSCH resource location or a first slot following an end of a PSCCH resource location.

In step 1704b, the data and/or the information is sent to the first terminal device via a PSCCH during running of the first retransmission timer.

In step 1705b, it is determined that the first retransmission timer expires, and a second RTT timer is started.

In step 1706b, it is determined that the second RTT timer expires, and a second retransmission timer is started.

In step 1707b, the data and/or the information is sent to the first terminal device via the PSCCH during running of the second retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

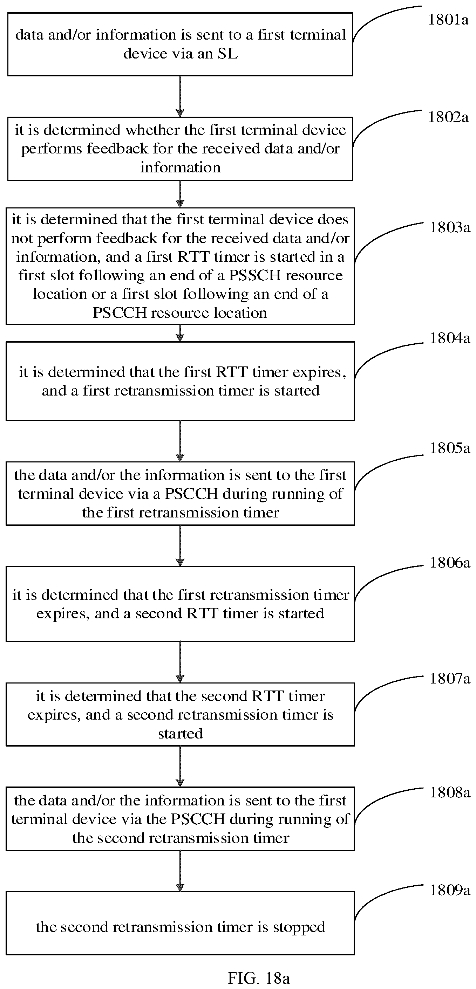

FIG. 18a is a schematic flowchart of a method for starting a timer provided by an embodiment of the present disclosure. The method is applied to a second terminal device, and as shown in FIG. 18a, the method for starting a timer may include the following steps.

In step 1801a, data and/or information is sent to a first terminal device via an SL.

In step 1802a, it is determined whether the first terminal device performs feedback for the received data and/or information.

In step 1803a, it is determined that the first terminal device does not perform feedback for the received data and/or information, and a first RTT timer is started in a first slot following an end of a PSSCH resource location or a first slot following an end of a PSCCH resource location.

In step 1804a, it is determined that the first RTT timer expires, and a first retransmission timer is started.

In step 1805a, the data and/or the information is sent to the first terminal device via a PSCCH during running of the first retransmission timer.

In step 1806a, it is determined that the first retransmission timer expires, and a second RTT timer is started.

In step 1807a, it is determined that the second RTT timer expires, and a second retransmission timer is started.

In step 1808a, the data and/or the information is sent to the first terminal device via the PSCCH during running of the second retransmission timer.

In step 1809a, the second retransmission timer is stopped.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

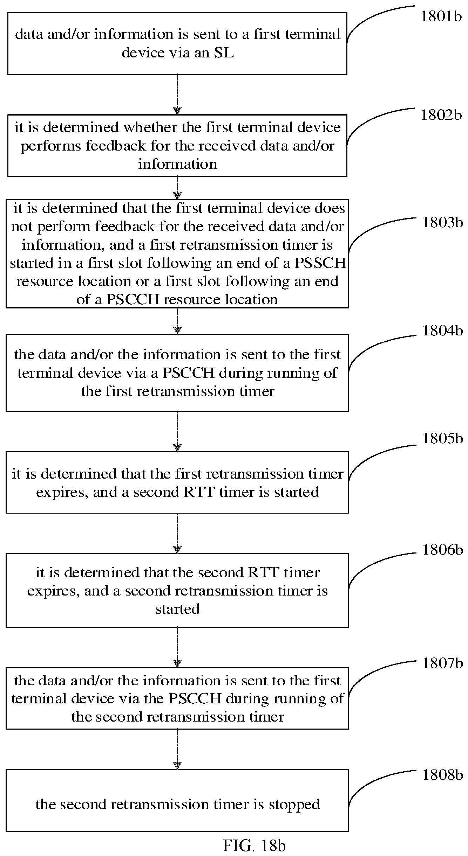

FIG. 18b is a schematic flowchart of a method for starting a timer provided by an embodiment of the present disclosure. The method is applied to a second terminal device, and as shown in FIG. 18b, the method for starting a timer may include the following steps.

In step 1801b, data and/or information is sent to a first terminal device via an SL.

In step 1802b, it is determined whether the first terminal device performs feedback for the received data and/or information.

In step 1803b, it is determined that the first terminal device does not perform feedback for the received data and/or information, and a first retransmission timer is started in a first slot following an end of a PSSCH resource location or a first slot following an end of a PSCCH resource location.

In step 1804b, the data and/or the information is sent to the first terminal device via a PSCCH during running of the first retransmission timer.

In step 1805b, it is determined that the first retransmission timer expires, and a second RTT timer is started.

In step 1806b, it is determined that the second RTT timer expires, and a second retransmission timer is started.

In step 1807b, the data and/or the information is sent to the first terminal device via the PSCCH during running of the second retransmission timer.

In step 1808b, the second retransmission timer is stopped.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

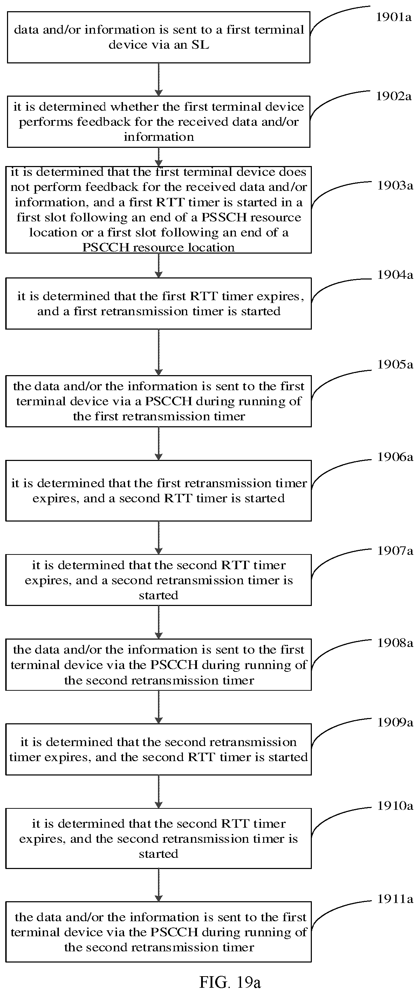

FIG. 19a is a schematic flowchart of a method for starting a timer provided by an embodiment of the present disclosure. The method is applied to a second terminal device, and as shown in FIG. 19a, the method for starting a timer may include the following steps.

In step 1901a, data and/or information is sent to a first terminal device via an SL.

In step 1902a, it is determined whether the first terminal device performs feedback for the received data and/or information.

In step 1903a, it is determined that the first terminal device does not perform feedback for the received data and/or information, and a first RTT timer is started in a first slot following an end of a PSSCH resource location or a first slot following an end of a PSCCH resource location.

In step 1904a, it is determined that the first RTT timer expires, and a first retransmission timer is started.

In step 1905a, the data and/or the information is sent to the first terminal device via a PSCCH during running of the first retransmission timer.

In step 1906a, it is determined that the first retransmission timer expires, and a second RTT timer is started.

In step 1907a, it is determined that the second RTT timer expires, and a second retransmission timer is started.

In step 1908a, the data and/or the information is sent to the first terminal device via the PSCCH during running of the second retransmission timer.

In step 1909a, it is determined that the second retransmission timer expires, and the second RTT timer is started.

In step 1910a, it is determined that the second RTT timer expires, and the second retransmission timer is started.

In step 1911a, the data and/or the information is sent to the first terminal device via the PSCCH during running of the second retransmission timer.

In summary, in the method for starting a timer provided in the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

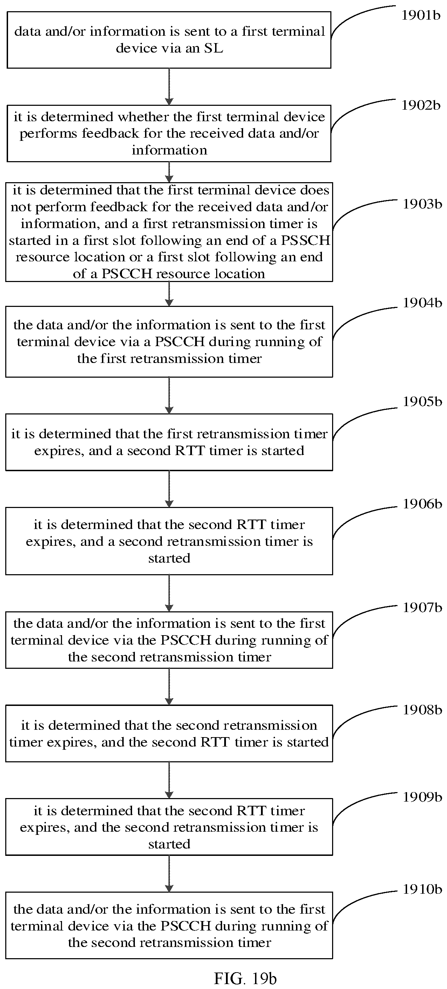

FIG. 19b is a schematic flowchart of a method for starting a timer provided by an embodiment of the present disclosure. The method is applied to a second terminal device, and as shown in FIG. 19b, the method for starting a timer may include the following steps.

In step 1901b, data and/or information is sent to a first terminal device via an SL.

In step 1902b, it is determined whether the first terminal device performs feedback for the received data and/or information.

In step 1903b, it is determined that the first terminal device does not perform feedback for the received data and/or information, and a first retransmission timer is started in a first slot following an end of a PSSCH resource location or a first slot following an end of a PSCCH resource location.

In step 1904b, the data and/or the information is sent to the first terminal device via a PSCCH during running of the first retransmission timer.

In step 1905b, it is determined that the first retransmission timer expires, and a second RTT timer is started.

In step 1906b, it is determined that the second RTT timer expires, and a second retransmission timer is started.

In step 1907b, the data and/or the information is sent to the first terminal device via the PSCCH during running of the second retransmission timer.

In step 1908b, it is determined that the second retransmission timer expires, and the second RTT timer is started.

In Step 1909b, it is determined that the second RTT timer expires, and the second retransmission timer is started.

In step 1910b, the data and/or the information is sent to the first terminal device via the PSCCH during running of the second retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

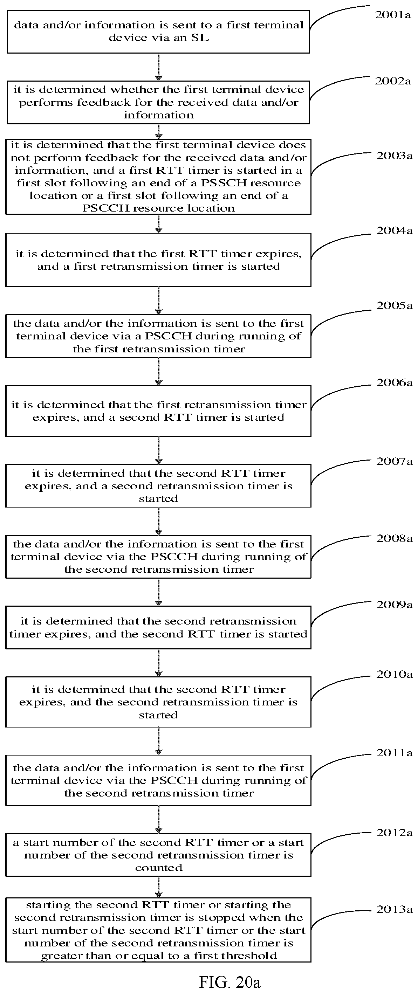

FIG. 20a is a schematic flowchart of a method for starting a timer provided by an embodiment of the present disclosure. The method is applied to a second terminal device, and as shown in FIG. 20a, the method for starting a timer may include the following steps.

In step 2001a, data and/or information is sent to a first terminal device via an SL.

In step 2002a, it is determined whether the first terminal device performs feedback for the received data and/or information.

In step 2003a, it is determined that the first terminal device does not perform feedback for the received data and/or information, and a first RTT timer is started in a first slot following an end of a PSSCH resource location or a first slot following an end of a PSCCH resource location.

In step 2004a, it is determined that the first RTT timer expires, and a first retransmission timer is started.

In step 2005a, the data and/or the information is sent to the first terminal device via a PSCCH during running of the first retransmission timer.

In step 2006a, it is determined that the first retransmission timer expires, and a second RTT timer is started.

In step 2007a, it is determined that the second RTT timer expires, and a second retransmission timer is started.

In step 2008a, the data and/or the information is sent to the first terminal device via the PSCCH during running of the second retransmission timer.

In step 2009a, it is determined that the second retransmission timer expires, and the second RTT timer is started.

In step 2010a, it is determined that the second RTT timer expires, and the second retransmission timer is started.

In step 2011a, the data and/or the information is sent to the first terminal device via the PSCCH during running of the second retransmission timer.

In step 2012a, a start number of the second RTT timer or a start number of the second retransmission timer is counted.

In step 2013a, starting the second RTT timer or starting the second retransmission timer is stopped when the start number of the second RTT timer or the start number of the second retransmission timer is greater than or equal to a first threshold.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

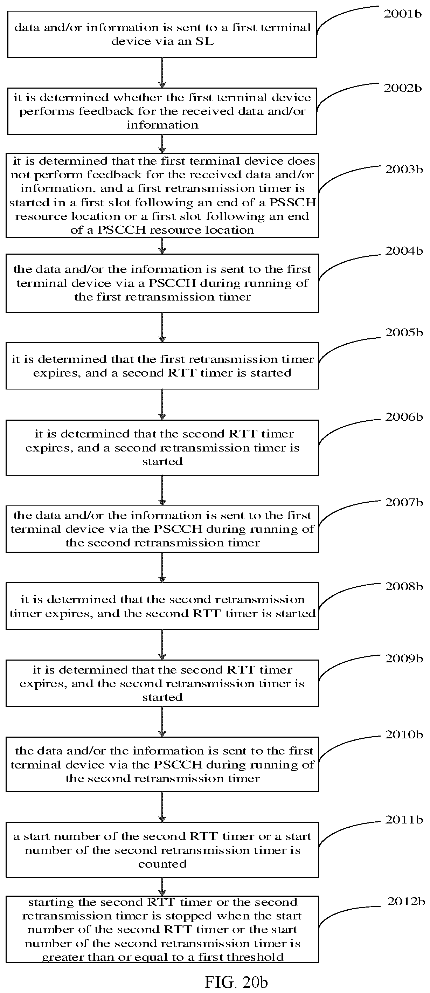

FIG. 20b is a schematic flowchart of a method for starting a timer provided by an embodiment of the present disclosure. The method is applied to a second terminal device, and as shown in FIG. 20b, the method for starting a timer may include the following steps.

In step 2001b, data and/or information is sent to a first terminal device via an SL.

In step 2002b, it is determined whether the first terminal device performs feedback for the received data and/or information.

In step 2003b, it is determined that the first terminal device does not perform feedback for the received data and/or information, and a first retransmission timer is started in a first slot following an end of a PSSCH resource location or a first slot following an end of a PSCCH resource location.

In step 2004b, the data and/or the information is sent to the first terminal device via a PSCCH during running of the first retransmission timer.

In step 2005b, it is determined that the first retransmission timer expires, and a second RTT timer is started.

In step 2006b, it is determined that the second RTT timer expires, and a second retransmission timer is started.

In step 2007b, the data and/or the information is sent to the first terminal device via the PSCCH during running of the second retransmission timer.

In step 2008b, it is determined that the second retransmission timer expires, and the second RTT timer is started.

In step 2009b, it is determined that the second RTT timer expires, and the second retransmission timer is started.

In step 2010b, the data and/or the information is sent to the first terminal device via the PSCCH during running of the second retransmission timer.

In step 2011b, a start number of the second RTT timer or a start number of the second retransmission timer is counted.

In step 2012b, starting the second RTT timer or the second retransmission timer is stopped when the start number of the second RTT timer or the start number of the second retransmission timer is greater than or equal to a first threshold.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

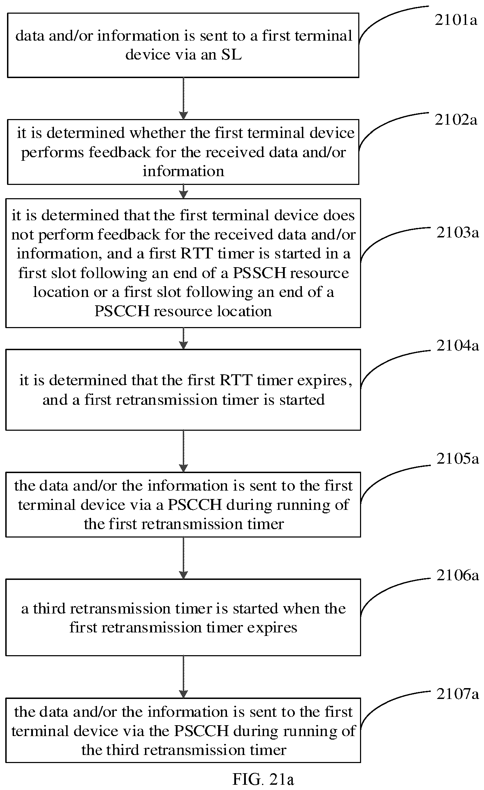

FIG. 21a is a schematic flowchart of a method for starting a timer provided by an embodiment of the present disclosure. The method is applied to a second terminal device, and as shown in FIG. 21a, the method for starting a timer may include the following steps.

In step 2101a, data and/or information is sent to a first terminal device via an SL.

In step 2102a, it is determined whether the first terminal device performs feedback for the received data and/or information.

In step 2103a, it is determined that the first terminal device does not perform feedback for the received data and/or information, and a first RTT timer is started in a first slot following an end of a PSSCH resource location or a first slot following an end of a PSCCH resource location.

In step 2104a, it is determined that the first RTT timer expires, and a first retransmission timer is started.

In step 2105a, the data and/or the information is sent to the first terminal device via a PSCCH during running of the first retransmission timer.

In step 2106a, a third retransmission timer is started when the first retransmission timer expires.

In step 2107a, the data and/or the information is sent to the first terminal device via the PSCCH during running of the third retransmission timer.

In step 2105a, when the first retransmission timer expires, the third retransmission timer is started, and the data and/or the information is sent to the first terminal device via the PSCCH during running of the third retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

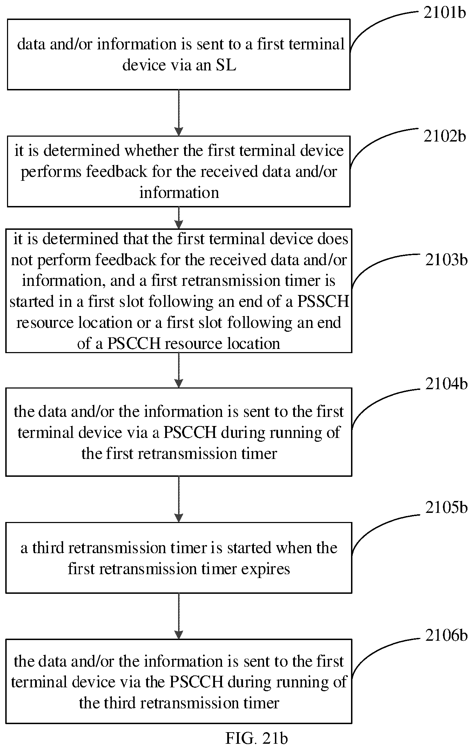

FIG. 21b is a schematic flowchart of a method for starting a timer provided by an embodiment of the present disclosure. The method is applied to a second terminal device, and as shown in FIG. 21b, the method for starting a timer may include the following steps.

In step 2101b, data and/or information is sent to a first terminal device via an SL.

In step 2102b, it is determined whether the first terminal device performs feedback for the received data and/or information.

In step 2103b, it is determined that the first terminal device does not perform feedback for the received data and/or information, and a first retransmission timer is started in a first slot following an end of a PSSCH resource location or a first slot following an end of a PSCCH resource location.

In step 2104b, the data and/or the information is sent to the first terminal device via a PSCCH during running of the first retransmission timer.

In step 2105b, a third retransmission timer is started when the first retransmission timer expires.

In step 2106b, the data and/or the information is sent to the first terminal device via the PSCCH during running of the third retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

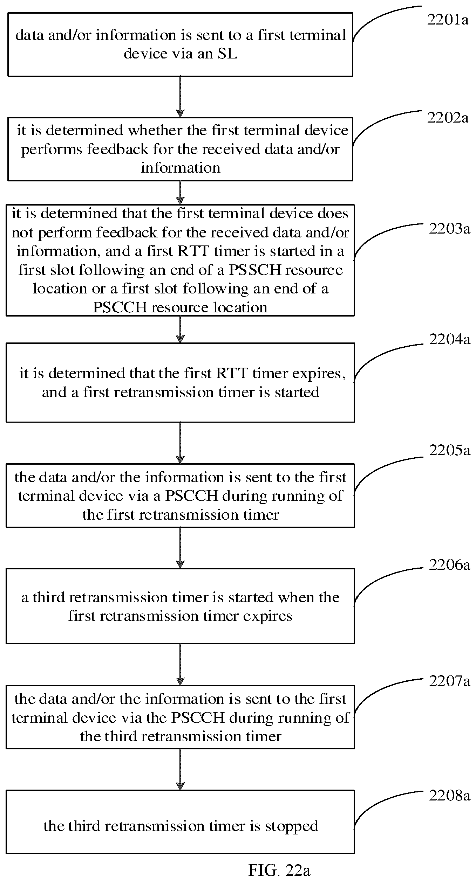

FIG. 22a is a schematic flowchart of a method for starting a timer provided by an embodiment of the present disclosure. The method is applied to a second terminal device, and as shown in FIG. 22a, the method for starting a timer may include the following steps.

In step 2201a, data and/or information is sent to a first terminal device via an SL.

In step 2202a, it is determined whether the first terminal device performs feedback for the received data and/or information.

In step 2203a, it is determined that the first terminal device does not perform feedback for the received data and/or information, and a first RTT timer is started in a first slot following an end of a PSSCH resource location or a first slot following an end of a PSCCH resource location.

In step 2204a, it is determined that the first RTT timer expires, and a first retransmission timer is started.

In step 2205a, the data and/or the information is sent to the first terminal device via a PSCCH during running of the first retransmission timer.

In step 2206a, a third retransmission timer is started when the first retransmission timer expires.

In step 2207a, the data and/or the information is sent to the first terminal device via the PSCCH during running of the third retransmission timer.

In step 2208a, the third retransmission timer is stopped.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

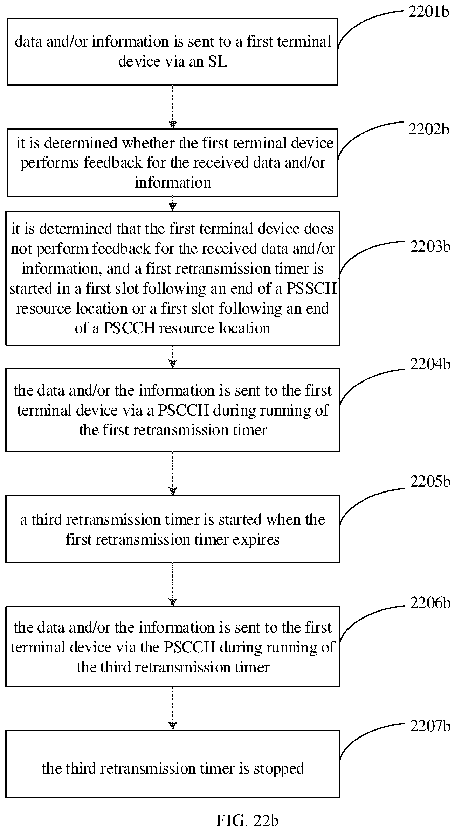

FIG. 22b is a schematic flowchart of a method for starting a timer provided by an embodiment of the present disclosure. The method is applied to a second terminal device, and as shown in FIG. 22b, the method for starting a timer may include the following steps.

In step 2201b, data and/or information is sent to a first terminal device via an SL.

In step 2202b, it is determined whether the first terminal device performs feedback for the received data and/or information.

In step 2203b, it is determined that the first terminal device does not perform feedback for the received data and/or information, and a first retransmission timer is started in a first slot following an end of a PSSCH resource location or a first slot following an end of a PSCCH resource location.

In step 2204b, the data and/or the information is sent to the first terminal device via a PSCCH during running of the first retransmission timer.

In step 2205b, a third retransmission timer is started when the first retransmission timer expires.

In step 2206b, the data and/or the information is sent to the first terminal device via the PSCCH during running of the third retransmission timer.

In step 2207b, the third retransmission timer is stopped.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

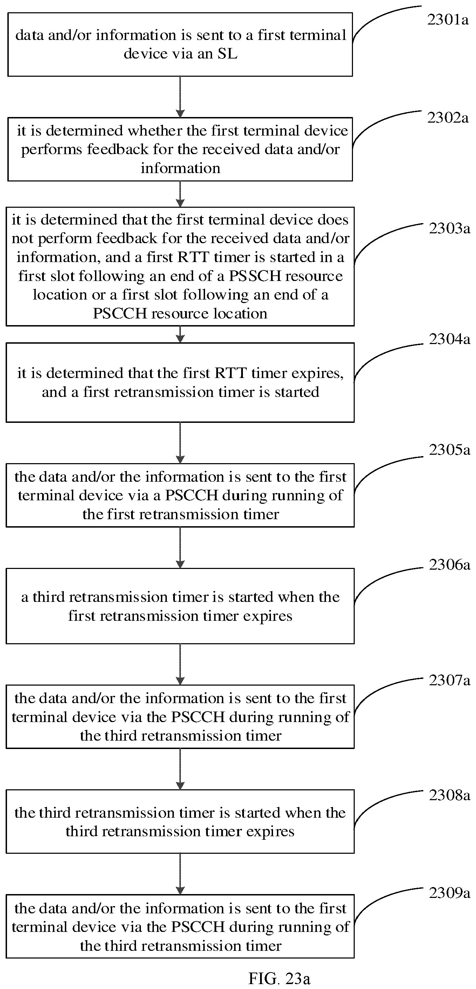

FIG. 23a is a schematic flowchart of a method for starting a timer provided by an embodiment of the present disclosure. The method is applied to a second terminal device, and as shown in FIG. 23a, the method for starting a timer may include the following steps.

In step 2301a, data and/or information is sent to a first terminal device via an SL.

In step 2302a, it is determined whether the first terminal device performs feedback for the received data and/or information.

In step 2303a, it is determined that the first terminal device does not perform feedback for the received data and/or information, and a first RTT timer is started in a first slot following an end of a PSSCH resource location or a first slot following an end of a PSCCH resource location.

In step 2304a, it is determined that the first RTT timer expires, and a first retransmission timer is started.

In step 2305a, the data and/or the information is sent to the first terminal device via a PSCCH during running of the first retransmission timer.

In step 2306a, a third retransmission timer is started when the first retransmission timer expires.

In step 2307a, the data and/or the information is sent to the first terminal device via the PSCCH during running of the third retransmission timer.

In step 2308a, the third retransmission timer is started when the third retransmission timer expires.

In step 2309a, the data and/or the information is sent to the first terminal device via the PSCCH during running of the third retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

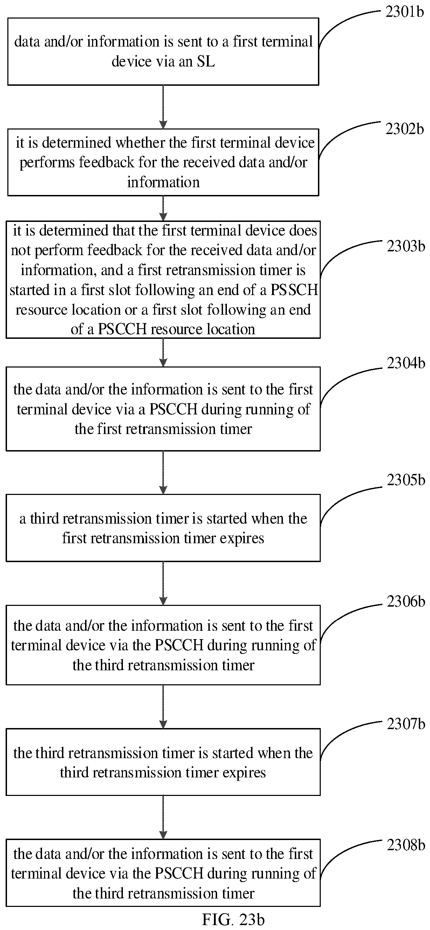

FIG. 23b is a schematic flowchart of a method for starting a timer provided by an embodiment of the present disclosure. The method is applied to a second terminal device, and as shown in FIG. 23b, the method for starting a timer may include the following steps.

In step 2301b, data and/or information is sent to a first terminal device via an SL.

In step 2302b, it is determined whether the first terminal device performs feedback for the received data and/or information.

In step 2303b, it is determined that the first terminal device does not perform feedback for the received data and/or information, and a first retransmission timer is started in a first slot following an end of a PSSCH resource location or a first slot following an end of a PSCCH resource location.

In step 2304b, the data and/or the information is sent to the first terminal device via a PSCCH during running of the first retransmission timer.

In step 2305b, a third retransmission timer is started when the first retransmission timer expires.

In step 2306b, the data and/or the information is sent to the first terminal device via the PSCCH during running of the third retransmission timer.

In step 2307b, the third retransmission timer is started when the third retransmission timer expires.

In step 2308b, the data and/or the information is sent to the first terminal device via the PSCCH during running of the third retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

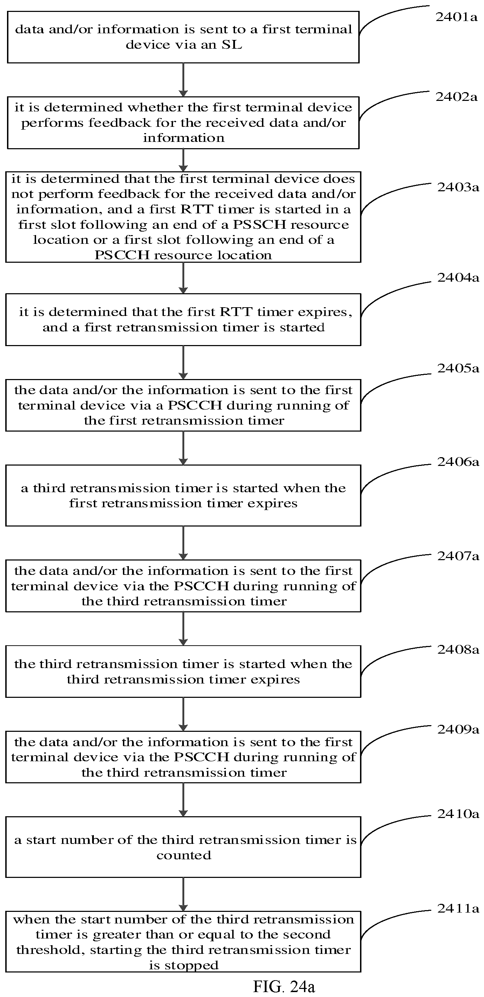

FIG. 24a is a schematic flowchart of a method for starting a timer provided by an embodiment of the present disclosure. The method is applied to a second terminal device, and as shown in FIG. 24a, the method for starting a timer may include the following steps.

In step 2401a, data and/or information is sent to a first terminal device via an SL.

In step 2402a, it is determined whether the first terminal device performs feedback for the received data and/or information.

In step 2403a, it is determined that the first terminal device does not perform feedback for the received data and/or information, and a first RTT timer is started in a first slot following an end of a PSSCH resource location or a first slot following an end of a PSCCH resource location.

In step 2404a, it is determined that the first RTT timer expires, and a first retransmission timer is started.

In step 2405a, the data and/or the information is sent to the first terminal device via a PSCCH during running of the first retransmission timer.

In step 2406a, a third retransmission timer is started when the first retransmission timer expires.

In step 2407a, the data and/or the information is sent to the first terminal device via the PSCCH during running of the third retransmission timer.

In step 2408a, the third retransmission timer is started when the third retransmission timer expires.

In step 2409a, the data and/or the information is sent to the first terminal device via the PSCCH during running of the third retransmission timer.

In step 2410a, a start number of the third retransmission timer is counted.

In step 241 1a, when the start number of the third retransmission timer is greater than or equal to the second threshold, starting the third retransmission timer is stopped.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

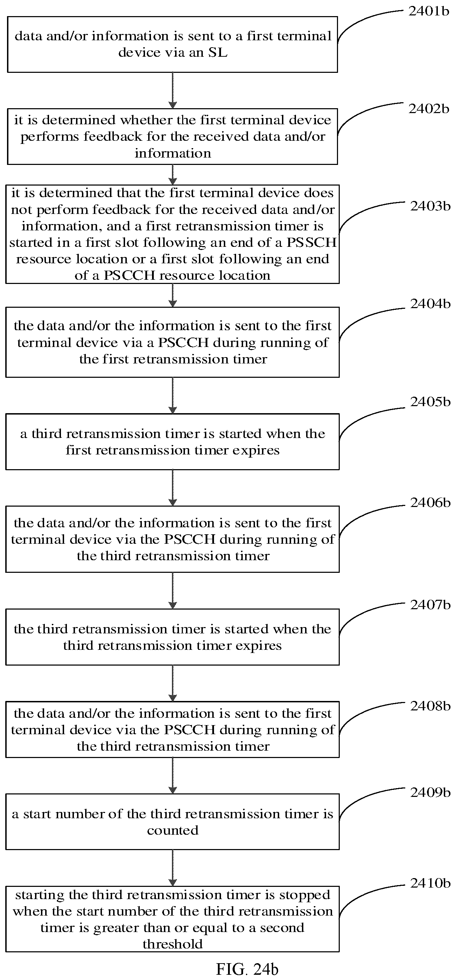

FIG. 24b is a schematic flowchart of a method for starting a timer provided by an embodiment of the present disclosure. The method is applied to a second terminal device, and as shown in FIG. 24b, the method for starting a timer may include the following steps.

In step 2401b, data and/or information is sent to a first terminal device via an SL.

In step 2402b, it is determined whether the first terminal device performs feedback for the received data and/or information.

In step 2403b, it is determined that the first terminal device does not perform feedback for the received data and/or information, and a first retransmission timer is started in a first slot following an end of a PSSCH resource location or a first slot following an end of a PSCCH resource location.

In step 2404b, the data and/or the information is sent to the first terminal device via a PSCCH during running of the first retransmission timer.

In step 2405b, a third retransmission timer is started when the first retransmission timer expires.

In step 2406b, the data and/or the information is sent to the first terminal device via the PSCCH during running of the third retransmission timer.

In step 2407b, the third retransmission timer is started when the third retransmission timer expires.

In step 2408b, the data and/or the information is sent to the first terminal device via the PSCCH during running of the third retransmission timer.

In step 2409b, a start number of the third retransmission timer is counted.

In step 2410b, starting the third retransmission timer is stopped when the start number of the third retransmission timer is greater than or equal to a second threshold.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

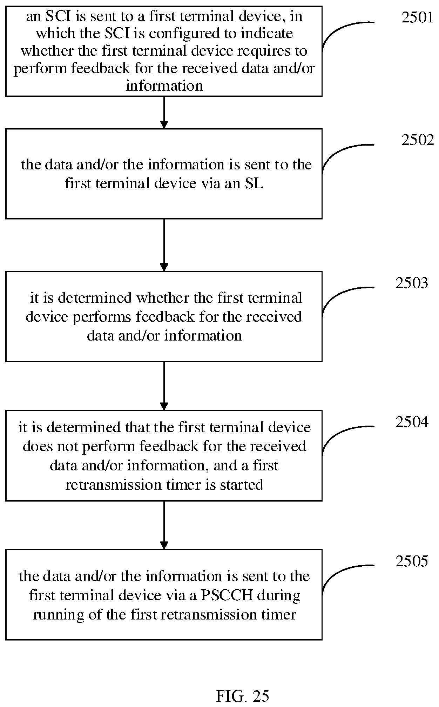

FIG. 25 is a schematic flowchart of a method for starting a timer provided by an embodiment of the present disclosure. The method is applied to a second terminal device, and as shown in FIG. 25, the method for starting a timer may include the following steps.

In step 2501, an SCI is sent to a first terminal device, in which the SCI is configured to indicate whether the first terminal device requires to perform feedback for the received data and/or information.

In step 2502, the data and/or the information is sent to the first terminal device via an SL.

In step 2503, it is determined whether the first terminal device performs feedback for the received data and/or information.

In step 2504, it is determined that the first terminal device does not perform feedback for the received data and/or information, and a first retransmission timer is started.

In step 2505, the data and/or the information is sent to the first terminal device via a PSCCH during running of the first retransmission timer.

In summary, in the method for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

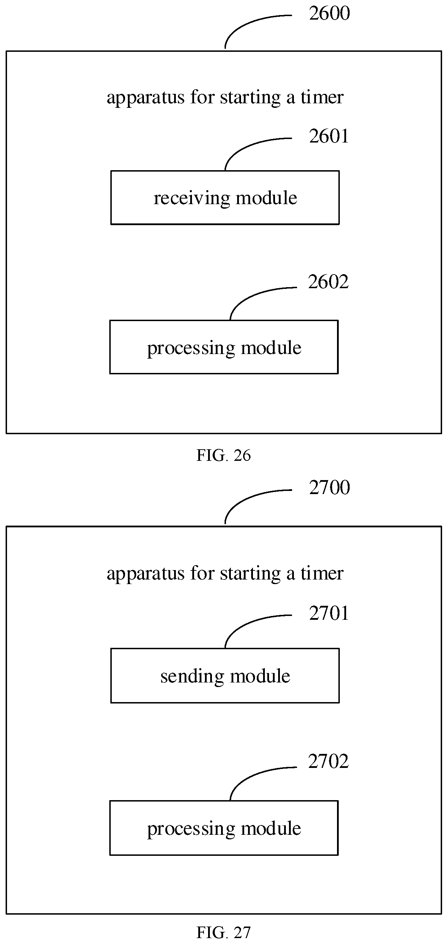

FIG. 26 is a schematic structural diagram of an apparatus for starting a timer according to an embodiment of the present disclosure, as shown in FIG. 26, the apparatus may include:
a receiving module 2601, configured to receive data and/or information sent by a second terminal device via an SL; and
a processing module 2602, configured to determine whether to perform feedback for the data and/or the information, and to start a first retransmission timer in response to determining not to perform feedback for the data and/or the information.

The receiving module 2601 is further configured to monitor a physical sidelink control channel (PSCCH) during running of the first retransmission timer.

In summary, in the apparatus for starting a timer provided by the embodiments of the present disclosure, the first terminal device receives the data and/or the information sent by the second terminal device via the SL, determines whether to perform feedback for the data and/or the information, starts the first retransmission timer in response to determining not to perform feedback for the data and/or the information, and monitors the PSCCH during the running of the first retransmission timer. It can be seen that the embodiments of the present disclosure provide the method for starting a timer for the case that the first terminal device does not perform feedback.

In an embodiment of the present disclosure, the processing module is further configured to:
in response to determining not to perform feedback for the data and/or the information, start a first RTT timer in a first slot following an end of a PSSCH resource location or a first slot following an end of a PSCCH resource location; and
in response to determining that the first RTT timer expires, start the first retransmission timer.

In an embodiment of the present disclosure, the first RTT timer is a round trip time (RTT) timer.

In an embodiment of the present disclosure, the processing module is further configured to:
in response to determining not to perform feedback for the data and/or the information, start a first retransmission timer in a first slot following an end of a PSSCH resource location or a first slot following an end of a PSCCH resource location.

In an embodiment of the present disclosure, the apparatus is further configured to:
determine that the data and/or the information is received and successfully decoded during the running of the first retransmission timer, and stop the first retransmission timer.

In an embodiment of the present disclosure, the apparatus is further configured to:
determine that no data and/or information is monitored in the PSCCH during the running of the first retransmission timer, and start a second RTT timer in a case that the first retransmission timer expires;
determine that the second RTT timer expires, and start a second retransmission timer; and
at least monitor a PSCCH during running of the second retransmission timer.

In an embodiment of the present disclosure, the apparatus is further configured to:
determine that the data and/or the information is received and successfully decoded during the running of the second retransmission timer, and stop the second retransmission timer.

In an embodiment of the present disclosure, the apparatus is further configured to:
determine that no data and/or information is not monitored in the PSCCH during the running of the second retransmission timer, and start the second RTT timer in a case that the second retransmission timer expires;
determine that the second RTT timer expires, and start the second retransmission timer; and
at least monitor the PSCCH during running of the second retransmission timer.

In an embodiment of the present disclosure, the apparatus is further configured to:
count a start number of the second RTT timer or a start number of the second retransmission timer; and
stop starting the second RTT timer or the second retransmission timer in a case that the start number of the second RTT timer or the start number of the second retransmission timer is greater than or equal to a first threshold.

In an embodiment of the present disclosure, the apparatus is further configured to:
determine that the data and/or the information is received and successfully decoded during running of the third retransmission timer, and stop the third retransmission timer.

In an embodiment of the present disclosure, the apparatus is further configured to:
determine that no data and/or information is monitored in the PSCCH during the running of the third retransmission timer, and start a third retransmission timer in a case that the third retransmission timer expires; and
at least monitor the PSCCH during running of the third retransmission timer.

In an embodiment of the present disclosure, the apparatus is further configured to:
count a start number of the third retransmission timer;
stop starting the third retransmission timer in a case that the start number of the third retransmission timer is greater than or equal to a second threshold.

In an embodiment of the present disclosure, the determining module is further configured to:
receive sidelink control information (SCI) sent by the second terminal device, in which the SCI is configured to indicate whether the first terminal device requires to perform feedback for the received data and/or information; and
determine whether to perform feedback for the received data and/or information based on the indication of the SCI.

In an embodiment of the present disclosure, the determining module is further configured to:
determine whether to perform feedback for the received data and/or information according to whether a resource pool corresponding to the received data and/or information is configured with a feedback resource.

In an embodiment of the present disclosure, the determining module is further configured to:
determine whether to perform feedback for the data and/or the information according to whether a resource pool corresponding to the received data and/or information is configured with a feedback resource.

FIG. 27 is a schematic structural diagram of an apparatus for starting a timer according to an embodiment of the present disclosure, as shown in FIG. 27, the apparatus may include:
a sending module 2701, configured to send data and/or information to a first terminal device via an SL; and
a processing module 2702, configured to determine whether the first terminal device performs feedback for the received data and/or information; and to determine that the first terminal device does not perform feedback for the received data and/or information, and start a first retransmission timer.

The sending module 2701 is further configured to send the data and/or the information to the first terminal device via a PSCCH during running of the first retransmission timer.

In summary, in the apparatus for starting a timer provided by the embodiments of the present disclosure, the first terminal device receives a new transmission of data and/or information by the second terminal device, determines whether to perform feedback for the received data and/or information, starts the first retransmission timer in response to determining not to perform feedback for the received data and/or information, and at least monitors the PSCCH during the running of the first retransmission timer. It can be seen that the embodiments of the present disclosure provide the method for starting a timer for the case that the first terminal device does not perform feedback.

In an embodiment of the present disclosure, the processing module is further configured to:
determine that the first terminal device does not perform feedback for the received data and/or information, and start a first RTT timer in a first slot following an end of a PSSCH resource location or a first slot following an end of a PSCCH resource location; and
determine that the first RTT timer expires, and start the first retransmission timer.

In an embodiment of the present disclosure, the first RTT timer is a round trip time (RTT) timer.

In an embodiment of the present disclosure, the processing module is further configured to:
determine that the first terminal device does not perform feedback for the received data and/or information, and start the first retransmission timer in a first slot following an end of a PSSCH resource location or a first slot following an end of a PSCCH resource location.

In an embodiment of the present disclosure, the apparatus is further configured to:
stop the first retransmission timer.

In an embodiment of the present disclosure, the apparatus is further configured to:
determine that the first retransmission timer expires, and start a second RTT timer;
determine that the second RTT timer expires, and start a second retransmission timer; and
send the data and/or the information to the first terminal device via the PSCCH during running of the second retransmission timer.

In an embodiment of the present disclosure, the apparatus is further configured to:
stop the second retransmission timer.

In an embodiment of the present disclosure, the apparatus is further configured to:
determine that the second retransmission timer expires, and start the second RTT timer;
determine that the second RTT timer expires, and start a second retransmission timer; and
send the data and/or the information to the first terminal device via the PSCCH during running of the second retransmission timer.

In an embodiment of the present disclosure, the apparatus is further configured to:
count a start number of the second RTT timer or a start number of the second retransmission timer; and
stop starting the second RTT timer or the second retransmission timer in a case that the start number of the second RTT timer or the start number of the second retransmission timer is greater than or equal to a first threshold.

In an embodiment of the present disclosure, the apparatus is further configured to:
start a third retransmission timer in a case that the first retransmission timer expires; and
send the data and/or the information to the first terminal device via the PSCCH during running of the third retransmission timer.

In an embodiment of the present disclosure, the apparatus is further configured to:
stop the third retransmission timer.

In an embodiment of the present disclosure, the apparatus is further configured to:
start the third retransmission timer in a case that the third retransmission timer expires; and
send the data and/or the information to the first terminal device via the PSCCH during running of the third retransmission timer.

In an embodiment of the present disclosure, the apparatus is further configured to:
count a start number of the third retransmission timer; and
stop starting the third retransmission timer in a case that the start number of the third retransmission timer is greater than or equal to a second threshold.

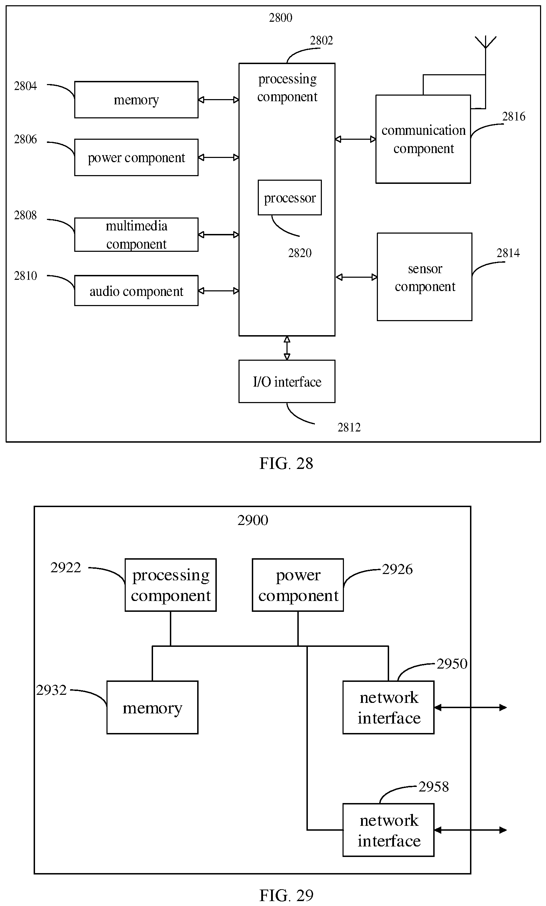

In an embodiment of the present disclosure, the apparatus is further configured to:
send an SCI to the first terminal device, in which the SCI is configured to indicate whether the first terminal device requires to perform feedback for the received data and/or information. FIG. 28 is a block diagram of a terminal device 2800 according to an embodiment of the present disclosure. For example, the terminal device 2800 may be a mobile phone, a computer, a digital broadcast terminal device, a messaging device, a game console, a tablet device, a medical device, a fitness device, a personal digital assistant, and the like.

Referring to FIG. 28, the terminal device 2800 may include at least one of the following components: a processing component 2802, a memory 2804, a power component 2806, a multimedia component 2808, an audio component 2810, an input/output (I/O) interface 2812, a sensor component 2813, and a communication component 2816

The processing component 2802 typically controls overall operations of the terminal device 2800, such as operations associated with display, telephone calls, data communications, camera operations, and recording operations. The processing component 2802 may include at least one processor 2820 to execute instructions to perform all or part of the steps in the foregoing methods. Furthermore, the processing component 2802 may include at least one module to facilitate interaction between the processing component 2802 and other components. For example, the processing component 2802 may include a multimedia module to facilitate interaction between the multimedia component 2808and the processing component 2802.

The memory 2804 is configured to store various types of data to support the operations of the terminal device 2800. Examples of such data include instructions, contact data, phonebook data, messages, pictures, videos, etc. for any application or method operating on the terminal device 2800. The memory 2804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 2806 provides power to various components of the terminal device 2800. The power component 2806 may include a power management system, at least one power supply, and other components associated with generating, managing, and distributing power for the terminal device 2800.

The multimedia component 2808 includes a screen providing an output interface between the terminal device 2800 and a user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also detect a wake-up time and a pressure associated with the touch or swipe action. In some embodiments, the multimedia component 2808 includes a front camera and/or a rear camera. When the terminal device 2800 is in an operation mode, such as a photographing mode or a video mode, the front camera and/or the rear camera may receive external multimedia data. Each of the front camera and the rear camera may be a fixed optical lens system or have focal length and optical zoom capability.

The audio component 2810 is configured to output and/or input audio signals. For example, the audio component 2810 includes a microphone (MIC) configured to receive an external audio signal when the terminal device 2800 is in an operation mode, such as a call mode, a recording mode, and a voice recognition mode. The received audio signal may be further stored in the memory 2804 or transmitted via the communication component 2816. In some embodiments, the audio component 2810 further includes a speaker to output audio signals.

The I/O interface 2812 provides an interface between the processing component 2802 and a peripheral interface module, which may be a keyboard, a click wheel, a button, and the like. The button may include, but is not limited to, a home button, a volume button, a starting button, and a locking button.

The sensor component 2813 includes at least one sensor for providing status assessments of various aspects of the terminal device 2800. For example, the sensor component 2813 may detect an on/off state of the device 2800, relative positioning of the component, for example, the component is a display and a keypad of the terminal device 2800, and the sensor component 2813 may further detect a change in a position of one component of the terminal device 2800 or the terminal device 2800, presence or absence of contact between the user and the terminal device 2800, an orientation or acceleration/deceleration of the terminal device 2800, and a temperature change of the terminal device 2800. The sensor component 2813 may include a proximity sensor configured to detect the presence of nearby objects without any physical contact. The sensor assembly 2813 may also include a light sensor, such as a CMOS or CCD image sensor, for use in imaging applications. In some embodiments, the sensor component 2813 may further include an acceleration sensor, a gyroscope sensor, a magnetic sensor, a pressure sensor, or a temperature sensor.

The communication component 2816 is configured to facilitate wired or wireless communication between the terminal device 2800 and other devices. The terminal device 2800 may access a wireless network based on a communication standard, such as WiFi, 2G, or 3G, or their combination. In an exemplary embodiment, the communication component 2816 receives a broadcast signal or broadcast related information from an external broadcast management system via a broadcast channel. In an exemplary embodiment, the communication component 2816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the terminal device 2800 may be implemented by at least one application specific integrated circuit (ASIC), digital signal processor (DSP), digital signal processing device (DSPD), programmable logic device (PLD), field programmable gate array (FPGA), controller, microcontroller, microprocessor, or other electronic components for performing the above methods.

FIG. 29 is a block diagram of a network device 2900 according to an embodiment of the present disclosure. For example, the network device 2900 may be provided as a network device. Referring to FIG. 29, the network device 2900 includes a processing component 2911 that further includes at least one processor and memory resources represented by the memory 2932 for storing instructions, such as an application, executable by the processing component 2922. The application program stored in the memory 2932 may include one or more modules each corresponding to a set of instructions. In addition, the processing component 2910 is configured to execute instructions to perform any of the foregoing methods applied to the network device, for example, as shown in FIG. 1.

The network device 2900 may also include a power component 2926 configured to perform power management of the network device 2900, a wired or wireless network interface 2950 configured to connect the network device 2900 to the network, and an input-output (I/O) interface 2958. The network device 2900 is operable based on operating systems stored in the memory 2932, such as Windows Server^{™}, MAC OS X^{™}, Unix^{™}, Linux^{™}, Free BSDT, or the like.

In the foregoing embodiments provided in the present disclosure, the methods provided in the embodiments of the present disclosure are separately described from the perspective of the network device and the terminal device. To implement the functions in the method provided in the foregoing embodiments of the present disclosure, the network device and the terminal device may include a hardware structure and a software module, to implement the foregoing functions in a form of a hardware structure, a software module, or a hardware structure plus software module. A function in the foregoing functions may be performed by using a hardware structure, a software module, or a hardware structure plus a software module.

In the foregoing embodiments provided in the present disclosure, the methods provided in the embodiments of the present disclosure are separately described from the perspective of the network device and the terminal device. To implement the functions in the method provided in the foregoing embodiments of the present disclosure, the network device and the terminal device may include a hardware structure and a software module, to implement the foregoing functions in a form of a hardware structure, a software module, or a hardware structure plus software module. A function in the foregoing functions may be performed by using a hardware structure, a software module, or a hardware structure plus a software module.

An embodiment of the present disclosure provides a communication apparatus. The communication apparatus may include a transceiver module and a processing module. The transceiver module may include a sending module and/or a receiving module. The sending module is configured to implement a transmitting function, and the receiving module is configured to implement a receiving function. The transceiver module may implement a transmitting function and/or a receiving function.

The communications apparatus may be a terminal device (for example, the terminal device in the foregoing method embodiments), an apparatus in the terminal device, or an apparatus that can be used by matching with the terminal device. Alternatively, the communication apparatus may be a network device, an apparatus in the network device, or an apparatus that can be used to match the network device.

Another communication apparatus provided in an embodiment of the present disclosure. The communications apparatus may be a network device, or may be a terminal device (for example, a terminal device in the foregoing method embodiments), or may be a chip, a chip system, a processor, or the like that supports the network device to implement the foregoing methods, or may be a chip, a chip system, a processor, or the like that supports the terminal device to implement the foregoing methods. The apparatus may be configured to implement the methods described in the foregoing method embodiments, for details, refer to the descriptions in the foregoing method embodiments.

The communication apparatus may include one or more processors. The processor may be a general-purpose processor, a dedicated processor, or the like, for example, a baseband processor or a central processing unit. The baseband processor may be configured to process a communication protocol and communication data, and the central processing unit may be configured to control the communication apparatus (for example, a network device, a baseband chip, a terminal device, a terminal device chip, a DU, or a CU) to execute a computer program and process data of the computer program.

Optionally, the communication apparatus may further include one or more memories, where a computer program may be stored thereon, and the processor executes the computer program, so that the communication apparatus performs the method described in the foregoing method embodiments. Optionally, the memory may further store data. The communication apparatus and the memory may be separately disposed, or may be integrated together.

Optionally, the communications apparatus may further include a transceiver and an antenna. The transceiver may be referred to as a transceiving unit, a transceiving machine, a transceiving circuit, or the like, and is configured to implement a transceiver function. The transceiver may include a receiver and a transmitter. The receiver may be referred to as a receiving machine or a receiving circuit, and is configured to implement a receiving function. The transmitter may be referred to as a transmitting machine or a transmitting circuit, and is configured to implement a transmission function.

Optionally, the communications apparatus may further include one or more interface circuits. The interface circuit is configured to receive a code instructions and transmit the code instructions to the processor. The processor runs the code instructions to cause the communication apparatus to perform the methods described in the foregoing method embodiments.

The communications apparatus is a terminal device (for example, the terminal device in the foregoing method embodiments), and the processor is configured to perform the method shown in any one of FIG. 1 to FIG. 4.

The communication apparatus is a network device, and the transceiver is configured to perform the method shown in any one of FIG. 5 to FIG. 7.

In an implementation, the processor may include a transceiver configured to implement a receiving and transmitting function. For example, the transceiver may be a transceiver circuit, an interface, or an interface circuit. The transceiver circuit, the interface, or the interface circuit configured to implement the receiving and transmitting functions may be separate, or may be integrated together. The transceiver circuit, the interface, or the interface circuit may be configured to read/write code/data, or the transceiver circuit, the interface, or the interface circuit may be configured to transmit or transmit a signal.

In an implementation, the processor may store a computer program, and the computer program runs on the processor, so that the communication apparatus may perform the methods described in the foregoing method embodiments. The computer program may be cured in a processor, in which case the processor may be implemented by hardware.

In an implementation, the communications apparatus may include a circuit, and the circuit may implement a function of sending or receiving or communicating in the foregoing method embodiments. The processor and the transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, and the like. The processor and the transceiver may also be fabricated using various IC process technologies, such as complementary metal oxide semiconductor (CMOS), n Metal-oxide-semiconductor (NMOS), positive channel metal oxide semiconductor (PMOS), bipolar junction transistor (BJT), bipolar CMOS (BiCMOS), silicon germanium, gallium arsenide, etc.

The communications apparatus in the foregoing embodiments may be a network device or a terminal device (for example, the terminal device in the foregoing method embodiments), but the scope of the communications apparatus described in the present disclosure is not limited thereto, and the structure of the communications apparatus may not be limited. The communication device may be a standalone device or may be part of a larger device. For example, the communication apparatus may be:
(1) an independent integrated circuit IC, or a chip, or a chip system or subsystem;
(2) a set having one or more ICs, optionally, the IC set may also include a storage component for storing data and a computer program;
(3) an ASIC, such as a modem;
(4) modules that can be embedded in other devices;
(5) a receiver, a terminal device, a smart terminal device, a cellular phone, a wireless device, a handset, a mobile unit, a vehicle-mounted device, a network device, a cloud device, an artificial intelligence device, etc.
(6) Other, etc.

For the case that the communication apparatus may be a chip or a chip system, the chip includes a processor and an interface. There may be one or more processors, and there may be a plurality of interfaces.

Optionally, the chip further includes a memory, and the memory is configured to store necessary computer programs and data.

Those skilled in the art may further understand that various illustrative logical blocks and steps listed in the embodiments of the present disclosure may be implemented by electronic hardware, computer software, or a combination of the two. Whether such functionality is implemented by hardware or software depends upon the particular application and design requirements of the overall system. A person skilled in the art may use various methods to implement the functions for each particular application, but it should not be understood that the implementation goes beyond the protection scope of the embodiments of the present disclosure.

An embodiment of the present disclosure further provides a system for determining a sidelink duration, in which the system includes a communications apparatus that serves as a terminal device (for example, the first terminal device in the foregoing method embodiments) and a communications apparatus that serves as a network device in the foregoing embodiments, or the system includes a communications apparatus that serves as a terminal device (for example, the first terminal device in the foregoing method embodiments) and a communications apparatus that serves as a network device in the foregoing embodiments.

The present disclosure further provides a readable storage medium having stored thereon instructions that, when executed by a computer, implement the functions of any one of the above method embodiments.

The present disclosure further provides a computer program product, which, when executed by a computer, implements the functions of any one of the above method embodiments.

In the above embodiments, all or part of them may be implemented by software, hardware, firmware or any combination thereof. When implemented using software, all or part of them may be implemented in the form of a computer program product. The computer program product includes one or more computer programs. When the computer program is loaded and executed on the computer, all or part of the processes or functions according to the embodiments of the present disclosure will be generated. The computer may be a general purpose computer, a special purpose computer, a computer network, or other programmable devices. The computer program may be stored in or sent from one computer-readable storage medium to another computer-readable storage medium, for example, the computer program may be transmitted from a website, computer, server or data center to another website site, computer, server or data center in a wired (such as coaxial cable, optical fiber, digital subscriber line (DSL)) or wireless (such as infrared, wireless, microwave, etc.) manner. The computer-readable storage medium may be any available medium that can be accessed by a computer, or a data storage device such as a server or a data center integrated with one or more available media. The available medium may be a magnetic medium (for example, a floppy disk, a hard disk, a magnetic tape), an optical medium (for example, a high-density digital video disc (digital video disc, DVD)), or a semiconductor medium (for example, a solid state disk (solid state disk, SSD)) etc.

Those of ordinary skill in the art can understand that the first, second, and other numbers involved in the present disclosure are only for convenience of description, and are not configured to limit the scope of the embodiments of the present disclosure, and also indicate the sequence.

At least one in the present disclosure can also be described as one or more, and more than one can be two, three, four or more, and the present disclosure is not limited. In the embodiments of the present disclosure, for a technical feature, the technical feature is distinguished by "first", "second", "third", "A", "B", "C" and "D", etc. The technical features described with "first", "second", "third", "A", "B", "C" and "D" have no sequence or order of magnitude among the technical features described.

Other embodiments of the invention will be readily apparent to those skilled in the art from consideration of the specification and practice of the invention disclosed herein. The present disclosure is intended to cover any modification, use or adaptation of the present invention, these modifications, uses or adaptations follow the general principles of the present invention and include common knowledge or conventional technical means in the technical field not disclosed in the present disclosure. The specification and embodiments are to be considered exemplary only, with a true scope and spirit of the present disclosure being indicated by the following claims.

It should be understood that the present disclosure is not limited to the precise constructions which have been described above and shown in the drawings, and various modifications and changes may be made without departing from the scope thereof. The scope of the present disclosure is limited only by the appended claims

## Claims

1. A method for starting a timer, performed by a first terminal device, comprising:
receiving data and/or information sent by a second terminal device via a sidelink (SL);
determining whether to perform feedback for the data and/or the information;
starting a first retransmission timer in response to determining not to perform feedback for the data and/or the information; and
monitoring a physical sidelink control channel (PSCCH) during running of the first retransmission timer.

2. The method according to claim 1, wherein starting the first retransmission timer comprises:
starting a first round trip time (RTT) timer in a first slot following an end of a physical sidelink shared channel (PSSCH) resource location or a first slot following an end of a PSCCH resource location; and
determining that the first RTT timer expires, and starting the first retransmission timer.

3. The method according to claim 1, wherein starting the first retransmission timer comprises:
starting the first retransmission timer in a first slot following an end of a PSSCH resource location or a first slot following an end of a PSCCH resource location.

4. The method according to claim 2 or 3, further comprising:
determining that the data and/or the information is received and successfully decoded during the running of the first retransmission timer, and stopping the first retransmission timer.

5. The method according to claim 2 or 3, further comprising:
determining that no data and/or information is monitored in the PSCCH during the running of the first retransmission timer, and starting a second RTT timer in a case that the first retransmission timer expires;
determining that the second RTT timer expires, and starting a second retransmission timer; and
monitoring the PSCCH during running of the second retransmission timer.

6. The method according to claim 5, further comprising:
determining that the data and/or the information is received and successfully decoded during the running of the second retransmission timer, and stopping the second retransmission timer.

7. The method according to claim 5, further comprising:
determining that no data and/or information is monitored in the PSCCH during the running of the second retransmission timer, and starting the second RTT timer in a case that the second retransmission timer expires;
determining that the second RTT timer expires, and starting the second retransmission timer; and
monitoring the PSCCH during running of the second retransmission timer.

8. The method according to claim 7, further comprising:
counting a start number of the second RTT timer or a start number of the second retransmission timer; and
stopping starting the second RTT timer or the second retransmission timer in a case that the start number of the second RTT timer or the start number of the second retransmission timer is greater than or equal to a first threshold.

9. The method according to claim 2 or 3, further comprising:
determining that no data and/or information is monitored in the PSCCH during the running of the first retransmission timer, and starting a third retransmission timer in a case that the first retransmission timer expires; and
monitoring the PSCCH during running of the third retransmission timer.

10. The method according to claim 9, further comprising:
determining that the data and/or the information is received and successfully decoded during the running of the third retransmission timer, and stopping the third retransmission timer.

11. The method according to claim 9, further comprising:
determining that no data and/or information is monitored in the PSCCH during the running of the third retransmission timer, and starting the third retransmission timer in a case that the third retransmission timer expires; and
monitoring the PSCCH during running of the third retransmission timer.

12. The method according to claim 11, further comprising:
counting a start number of the third retransmission timer; and
stopping starting the third retransmission timer in a case that the start number of the third retransmission timer is greater than or equal to a second threshold.

13. The method according to claim 1, wherein determining whether to perform feedback for the data and/or the information comprises:
receiving sidelink control information (SCI) sent by the second terminal device, wherein the SCI is configured to indicate whether the first terminal device requires to perform feedback for the received data and/or information; and
determining whether to perform feedback for the received data and/or information based on the indication of the SCI.

14. The method according to claim 1, wherein determining whether to perform feedback for the data and/or the information comprises:
determining whether to perform feedback for the received data and/or information according to whether a resource pool corresponding to the received data and/or information is configured with a feedback resource.

15. A method for starting a timer, performed by a second terminal device, comprising:
sending data and/or information to a first terminal device via an SL;
determining whether the first terminal device performs feedback for the received data and/or information;
determining that the first terminal device does not perform feedback for the received data and/or information, and starting a first retransmission timer; and
sending the data and/or the information to the first terminal device via a PSCCH during running of the first retransmission timer.

16. The method according to claim 15, wherein starting the first retransmission timer comprises:
starting a first RTT timer in a first slot following an end of a PSSCH resource location or a first slot following an end of a PSCCH resource location; and
determining that the first RTT timer expires, and starting the first retransmission timer.

17. The method according to claim 15, wherein starting the first retransmission timer comprises:
starting the first retransmission timer in a first slot following an end of a PSSCH resource location or a first slot following an end of a PSCCH resource location.

18. The method according to claim 16 or 17, further comprising:
stopping the first retransmission timer.

19. The method according to claim 16 or 17, further comprising:
determining that the first retransmission timer expires, and starting a second RTT timer;
determining that the second RTT timer expires, and starting a second retransmission timer; and
sending the data and/or the information to the first terminal device via the PSCCH during running of the second retransmission timer.

20. The method according to claim 19, further comprising:
stopping the second retransmission timer.

21. The method according to claim 19, further comprising:
determining that the second retransmission timer expires, and starting the second RTT timer;
determining that the second RTT timer expires, and starting the second retransmission timer; and
sending the data and/or the information to the first terminal device via the PSCCH during running of the second retransmission timer.

22. The method according to claim 21, further comprising:
counting a start number of the second RTT timer or a start number of the second retransmission timer; and
stopping starting the second RTT timer or the second retransmission timer in a case that the start number of the second RTT timer or the start number of the second retransmission timer is greater than or equal to a first threshold.

23. The method according to claim 16 or 17, further comprising:
starting a third retransmission timer in a case that the first retransmission timer expires; and
sending the data and/or the information to the first terminal device via the PSCCH during running of the third retransmission timer.

24. The method according to claim 23, further comprising:
stopping the third retransmission timer.

25. The method according to claim 23, further comprising:
starting the third retransmission timer in a case that the third retransmission timer expires; and
sending the data and/or the information to the first terminal device via the PSCCH during running of the third retransmission timer.

26. The method according to claim 25, further comprising:
counting a start number of the third retransmission timer; and
stopping starting the third retransmission timer in a case that the start number of the third retransmission timer is greater than or equal to a second threshold.

27. The method according to claim 15, further comprising:
sending an SCI to the first terminal device, wherein the SCI is configured to indicate whether the first terminal device requires to perform feedback for the received data and/or information.

28. An apparatus for starting a timer starting, comprising:
a receiving module, configured to receive data and/or information sent by a second terminal device via an SL; and
a processing module, configured to determine whether to perform feedback for the data and/or the information; and to start a first retransmission timer in response to determining not to perform feedback for the data and/or the information;
wherein the receiving module is further configured to monitor a physical sidelink control channel (PSCCH) during running of the first retransmission timer.

29. An apparatus for starting a timer, comprising:
a sending module, configured to send data and/or information to a first terminal device via an SL; and
a processing module, configured to determine whether the first terminal device performs feedback for the received data and/or information; and to determine that the first terminal device does not perform feedback for the received data and/or information, and start a first retransmission timer;
wherein the sending module is further configured to send the data and/or the information to the first terminal device via a PSCCH during running of the first retransmission timer.

30. A communication apparatus, comprising a processor and a memory, wherein the memory stores a computer program, and the processor executes the computer program stored in the memory, to cause the apparatus to perform the method according to any one of claims 1 to 14.

31. A communication apparatus, comprising a processor and a memory, wherein the memory stores a computer program, and the processor executes the computer program stored in the memory, to cause the apparatus to perform the method according to any one of claims 15 to 27.

32. A communication apparatus, comprising a processor and an interface circuit, wherein
the interface circuit is configured to receive code instructions and transmit the code instructions to the processor; and
the processor is configured to run the code instructions to perform the method according to any one of claims 1 to 14.

33. A communication apparatus, comprising a processor and an interface circuit, wherein
the interface circuit is configured to receive code instructions and transmit the code instructions to the processor; and
the processor is configured to run the code instructions to perform the method according to any one of claims 15 to 27.

34. A computer-readable storage medium for storing instructions that, when being executed, cause the method according to any one of claims 1 to 14 to be implemented.

35. A computer-readable storage medium for storing instructions that, when being executed, cause the method according to any one of claims 18 to 27 to be implemented.
